# EUROPEAN PATENT APPLICATION

(11) **EP 4 539 448 A1**
(43) Date of publication of application: **16.04.2025**
(21) Application number: 23819630.7
(22) Date of filing: 22.05.2023
(51) Int. Cl.: H04N 5/222, H04N 23/60

(54) **INFORMATION PROCESSING DEVICE, INFORMATION PROCESSING METHOD, PROGRAM, AND INFORMATION PROCESSING SYSTEM**

(30) Priority: 07.06.2022 JP 2022092354
(71) Applicant: Sony Group Corporation, Tokyo 108-0075 (JP)
(72) Inventor: HIROSE, Masaki, Tokyo 108-0075 (JP); KIKUCHI, Hiroaki, Tokyo 108-0075 (JP); TSUCHIYA, Takashi, Tokyo 108-0075 (JP)
(74) Representative: D Young & Co LLP
(86) International application number: PCT/JP2023/018964
(87) International publication number: WO 2023/238646

(57) **Abstract**

[Problem] To make it possible to confirm color tone and the like of a captured video at a time point before capturing a virtual video on a display by a camera.

[Solution] An information processing apparatus includes: a rendering unit (520a) that generates a virtual video by performing rendering using a 3D model used in an imaging system that captures, by a camera (502), a video on a display (505) that displays the virtual video obtained by the rendering using the 3D model; and a video processing unit (33) that performs, on the virtual video generated by the rendering unit, actual-imaging video conversion processing for generating a simulation video by using a processing parameter that achieves a characteristic of luminance or color at a time of imaging by the camera used in the imaging system.

## Description

### TECHNICAL FIELD

The present technology relates to an information processing apparatus, an information processing method, a program, and an information processing system, and particularly relates to a video production technology using a virtual video.

### BACKGROUND ART

As an imaging method for producing a video content such as a movie, a technique is known in which a performer performs acting in front of a so-called green screen and then a background video is combined.

Furthermore, in recent years, instead of green screen imaging, an imaging system has been developed in which, in a studio provided with a large display, a background video is displayed on the display, and a performer performs acting in front thereof, whereby the performer and the background can be imaged, and the imaging system is known as so-called virtual production, in-camera VFX, or light emitting diode (LED) wall virtual production.

Patent Document 1 below discloses a technology of a system that images a performer acting or an object in front of a background video.

### CITATION LIST

### PATENT DOCUMENT

Patent Document 1: US Patent Application Publication No. 2020/0145644 A

### SUMMARY OF THE INVENTION

### PROBLEMS TO BE SOLVED BY THE INVENTION

With displaying a background video on a large display and then imaging a performer and the background video by a camera, there is no need to separately combine the background video after the imaging, and the performer and staff can visually understand the scene to perform acting and determine whether the acting is good or bad, for example, which are more advantageous than the green screen imaging.

However, appearance of the background should be different depending on a position and an imaging direction of the camera with respect to the display. When only the background video is simply projected, the background does not change even if the position, imaging direction, and the like of the camera are different, and an unnatural video is rather obtained. Thus, by changing the background video (at least a video in a range within an angle of view of the camera in the display) so that the background video has the appearance equivalent to that of an actual three-dimensional space according to the position, imaging direction, and the like of the camera, it is possible to capture a video equivalent to that in a case where a video is captured with an actual scene as the background.

In the case of such an imaging system using a virtual background video, color tone and the like of the captured video may be different from what a director or staff had in mind at a stage of actual imaging. In such a case, it is necessary to adjust the color tone by performing various setting changes and the like in a studio or the like as an imaging site, which is an extremely troublesome and time-consuming work in reality. This deteriorates efficiency of video production.

Thus, the present disclosure proposes a technology capable of more efficiently performing video production.

### SOLUTIONS TO PROBLEMS

An information processing apparatus according to the present technology includes: a rendering unit that generates a virtual video by performing rendering using a 3D model used in an imaging system that captures, by a camera, a video on a display that displays the virtual video obtained by the rendering using the 3D model; and a video processing unit that performs, on the virtual video generated by the rendering unit, actual-imaging video conversion processing for generating a simulation video by using a processing parameter that achieves a characteristic of luminance or color at a time of imaging by the camera used in the imaging system.

Prior to imaging, it is enabled to render the virtual video such as a background video is rendered by using the 3D model to be used in the imaging system and monitor the video. In this case, video processing of reproducing characteristics of luminance and color of the camera at the time of imaging is performed on the virtual video.

### BRIEF DESCRIPTION OF DRAWINGS

Fig. 1 is an explanatory diagram of an imaging system of an embodiment of the present technology.
Fig. 2 is an explanatory diagram of a background video according to a camera position of the imaging system of the embodiment.
Fig. 3 is an explanatory diagram of a background video according to a camera position of the imaging system of the embodiment.
Fig. 4 is an explanatory diagram of a video content producing step of the embodiment.
Fig. 5 is a block diagram of the imaging system of the embodiment.
Fig. 6 is a flowchart of background video generation of the imaging system of the embodiment.
Fig. 7 is a block diagram of the imaging system using a plurality of cameras of the embodiment.
Fig. 8 is a block diagram of an information processing apparatus of the embodiment.
Fig. 9 is an explanatory diagram of pre-visualization of the embodiment.
Fig. 10 is a block diagram of a system configuration example of a first embodiment.
Fig. 11 is an explanatory diagram of setting of cutout range from an image sensor.
Fig. 12 is a flowchart of actual-imaging video conversion processing of the first embodiment.
Fig. 13 is a block diagram of a system configuration example of a second embodiment.
Fig. 14 is a flowchart of color conversion information generation processing of the second embodiment.
Fig. 15 is a block diagram of a system configuration example of a third embodiment.
Fig. 16 is an explanatory diagram of camera setting storage for each of scenes of the third embodiment.
Fig. 17 is a flowchart of processing for camera setting of the third embodiment.
Fig. 18 is a block diagram of a system configuration example of a fourth embodiment.
Fig. 19 is an explanatory diagram of a camera position operation video of the fourth embodiment.
Fig. 20 is an explanatory diagram of a moire alert of a fourth embodiment.
Fig. 21 is an explanatory diagram of operation in the camera position operation video of the fourth embodiment.
Fig. 22 is a flowchart of moire alert processing of the fourth embodiment.
Fig. 23 is a flowchart of moire alert processing at the time of imaging of the fourth embodiment.

### MODE FOR CARRYING OUT THE INVENTION

Hereinafter, embodiments will be described in the following order.
<1. Imaging System and Content Production>
<2. Configuration of Information Processing Apparatus>
<3. First Embodiment>
<4. Second Embodiment>
<5. Third Embodiment>
<6. Fourth Embodiment>
<7. Flow of Imaging Data>
<8. Summary and Modification Examples>

Note that, in the present disclosure, "video" or "image" includes both a still image and a moving image. In addition, "video" refers not only to a state in which video data is displayed on a display, but also video data in a state in which video data is not displayed on the display may be comprehensively referred to as "video".

For example, in the embodiments, a background video before being displayed on the display, a captured video by a camera, and a background video or a captured video switched by a switcher are not a video actually displayed but video data, but are referred to as "background video", "captured video", or the like for convenience.

### <1. Imaging System and Video Content Production>

A description will be given of an imaging system to which the technology of the present disclosure can be applied and production of a video content.

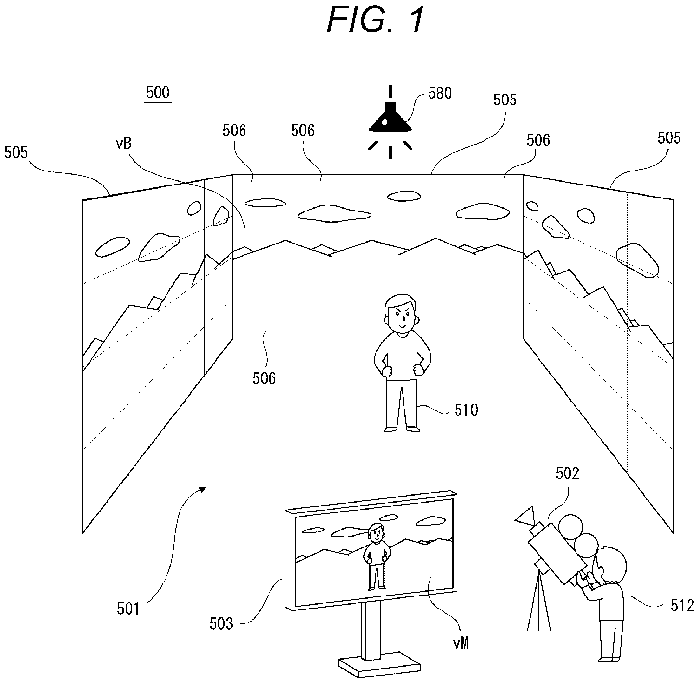

Fig. 1 schematically illustrates an imaging system 500. The imaging system 500 is a system that performs imaging as virtual production, and a part of equipment disposed in an imaging studio is illustrated in the drawing.

In the imaging studio, a performance area 501 is provided in which a performer 510 performs performance such as acting. A large display apparatus is disposed on at least a back surface, and further, left and right side surfaces, and an upper surface of the performance area 501. Although the device type of the display apparatus is not limited, the drawing illustrates an example in which an LED wall 505 is used as an example of the large display apparatus.

One LED wall 505 forms a large panel by vertically and horizontally connecting and disposing a plurality of LED panels 506. The size of the LED wall 505 mentioned here is not particularly limited, but is only necessary to be a size that is necessary or sufficient as a size for displaying a background when the performer 510 is imaged.

A necessary number of lights 580 are disposed at necessary positions such as above or on the side of the performance area 501 to illuminate the performance area 501.

Near the performance area 501, for example, a camera 502 is disposed for imaging a movie or other video content. A cameraman 512 can move the position of the camera 502, and can perform an operation of an imaging direction, an angle of view, or the like. Of course, it is also conceivable that movement, angle of view operation, or the like of the camera 502 is performed by remote operation. Furthermore, the camera 502 may automatically or autonomously move or change the angle of view. For this purpose, the camera 502 may be mounted on a camera platform or a mobile body.

The camera 502 collectively images the performer 510 in the performance area 501 and a video displayed on the LED wall 505. For example, by displaying a scene as a background video vB on the LED wall 505, it is possible to capture a video similar to that in a case where the performer 510 is actually in a place of the scene and performs acting.

An output monitor 503 is disposed near the performance area 501. A video captured by the camera 502 is displayed on the output monitor 503 in real time as a monitor video vM. As a result, a director and staff who produce a video content can confirm the captured video.

As described above, the imaging system 500 that images the performance of the performer 510 in the background of the LED wall 505 in the imaging studio has various advantages as compared with the green screen imaging.

For example, in the case of the green screen imaging, it is difficult for the performer to imagine the background and the situation of the scene, which may affect the acting. Whereas, by displaying the background video vB, the performer 510 can easily perform acting, and the quality of acting is improved. Furthermore, it is easy for the director and other staff to determine whether or not the acting by the performer 510 matches the background and the situation of the scene.

Furthermore, post-production after imaging is more efficient than in the case of the green screen imaging. This is because so-called chroma key composition may be unnecessary or color correction or reflection composition may be unnecessary. Furthermore, even in a case where chroma key composition is required at the time of imaging, it is only necessary to display green or blue video, and thus, it is also helpful to improve the efficiency that it is not necessary to add a physical background screen.

In the case of the green screen imaging, the color tone of the green increases on the performer's body, dress, and objects, and thus correction thereof is necessary. Furthermore, in the case of the green screen imaging, in a case where there is an object in which a surrounding scene is reflected, such as glass, a mirror, or a snowdome, it is necessary to generate and combine an image of the reflection, but this is troublesome work.

Whereas, in the case of imaging by the imaging system 500 in Fig. 1, the color tone of the green does not increase, and thus the correction is unnecessary. Furthermore, by displaying the background video vB, the reflection on the actual article such as glass is naturally obtained and imaged, and thus, it is also unnecessary to combine the reflection video.

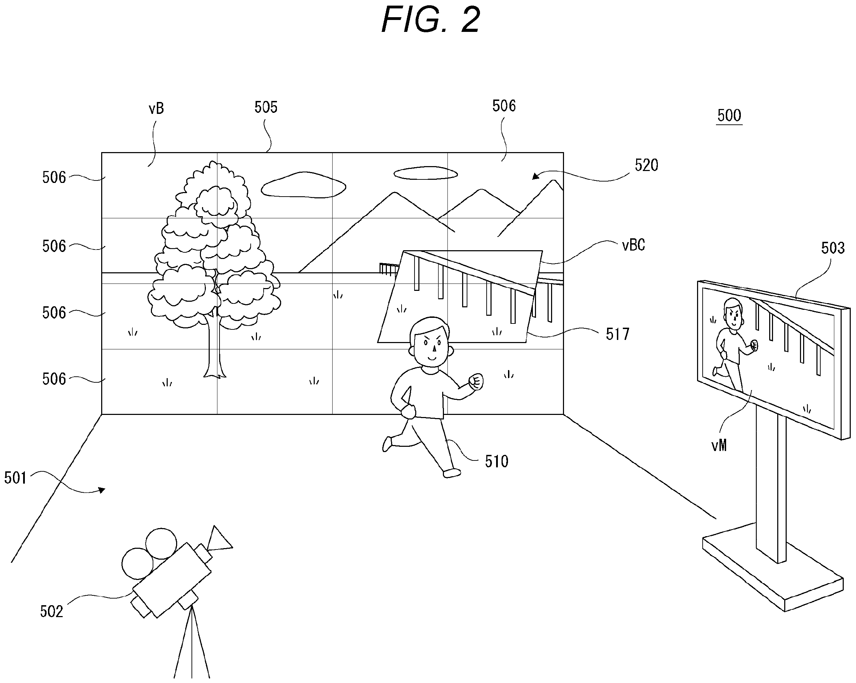

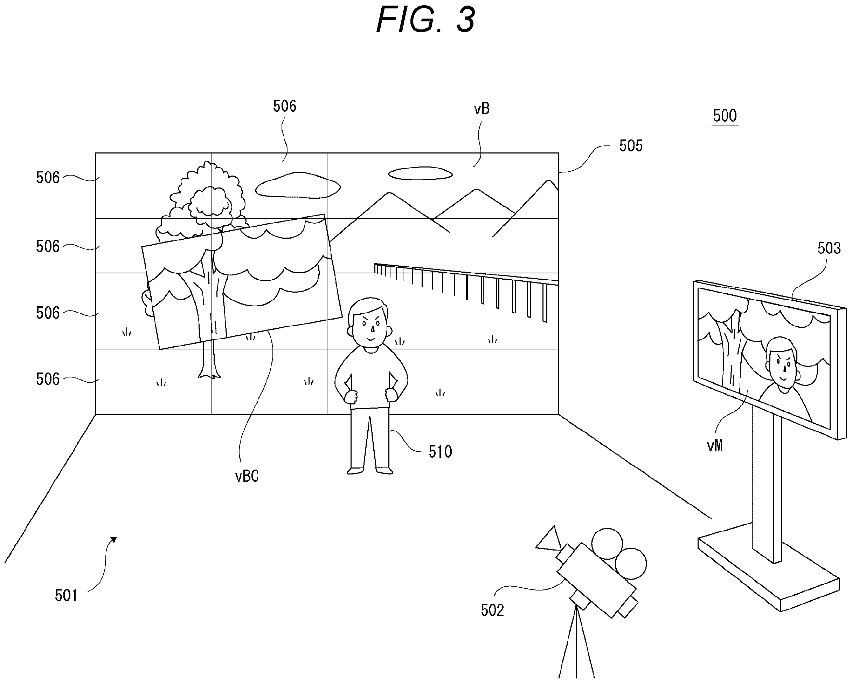

Here, the background video vB will be described with reference to Figs. 2 and 3. Even if the background video vB is displayed on the LED wall 505 and captured together with the performer 510, the background of the captured video becomes unnatural only by simply displaying the background video vB. This is because a background that is three-dimensional and has depth is actually used as the background video vB in a planar manner.

For example, the camera 502 can image the performer 510 in the performance area 501 from various directions, and can also perform zoom operation. The performer 510 also does not stop at one place. Then, the actual appearance of the background of the performer 510 should change according to the position, the imaging direction, the angle of view, and the like of the camera 502, but such a change cannot be obtained in the background video vB as a planar video. Thus, the background video vB is changed so that the background is similar to the actual appearance including a parallax.

Fig. 2 illustrates a state in which the camera 502 is imaging the performer 510 from a position on the left side of the drawing, and Fig. 3 illustrates a state in which the camera 502 is imaging the performer 510 from a position on the right side of the drawing. In each drawing, a capturing region video vBC is illustrated in the background video vB.

Note that a portion of the background video vB excluding the capturing region video vBC is referred to as an "outer frustum", and the capturing region video vBC is referred to as an "inner frustum".

The background video vB described here indicates the entire video displayed as the background including the capturing region video vBC (inner frustum).

A range of the capturing region video vBC (inner frustum) corresponds to a range actually imaged by the camera 502 in the display surface of the LED wall 505. Then, the capturing region video vBC is a video that expresses a scene that is actually viewed when the position of the camera 502 is set as a viewpoint according to the position, the imaging direction, the angle of view, and the like of the camera 502.

Specifically, 3D background data is prepared that is a three dimensions (3D) model as a background, and the capturing region video vBC is rendered on the basis of the viewpoint position of the camera 502 sequentially in real time with respect to the 3D background data.

Note that the range of the capturing region video vBC is actually a range slightly wider than the range imaged by the camera 502 at the time point. This is to prevent the video of the outer frustum from being reflected due to a drawing delay and to avoid the influence of the diffracted light from the video of the outer frustum when the range of imaging is slightly changed by panning, tilting, zooming, or the like of the camera 502.

The video of the capturing region video vBC rendered in real time in this manner is combined with the video of the outer frustum. The video of the outer frustum used in the background video vB may be rendered in advance on the basis of the 3D background data or may be rendered in real time for each frame or each intermittent frame, and the video of the capturing region video vBC (inner frustum) is incorporated into a part of the video of the outer frustum to generate the entire background video vB.

Note that there is a case where the video of the outer frustum is also rendered for each frame similarly to the inner frustum, but here, a static video is taken as an example, and in the following description, a case where only the head frame of the video of the outer frustum is rendered will be mainly described as an example.

As a result, even when the camera 502 is moved back and forth, or left and right, or zoom operation is performed, the background of the range imaged together with the performer 510 is captured as a video corresponding to a change in the viewpoint position or a field of view (FOV) accompanying the actual movement of the camera 502.

As illustrated in Figs. 2 and 3, the monitor video vM including the performer 510 and the background is displayed on the output monitor 503, and this is the captured video. The background of the monitor video vM is the capturing region video vBC. That is, the background included in the captured video is a real-time rendered video.

As described above, in the imaging system 500 of the embodiment, not only the background video vB is simply displayed in a planar manner but also the background video vB including the capturing region video vBC is changed in real time so that a video can be captured similar to that in a case where a scene is actually imaged.

Note that contrivance may also be made to reduce a processing load of the system by rendering only the capturing region video vBC as a range reflected by the camera 502 in real time instead of the entire background video vB displayed on the LED wall 505.

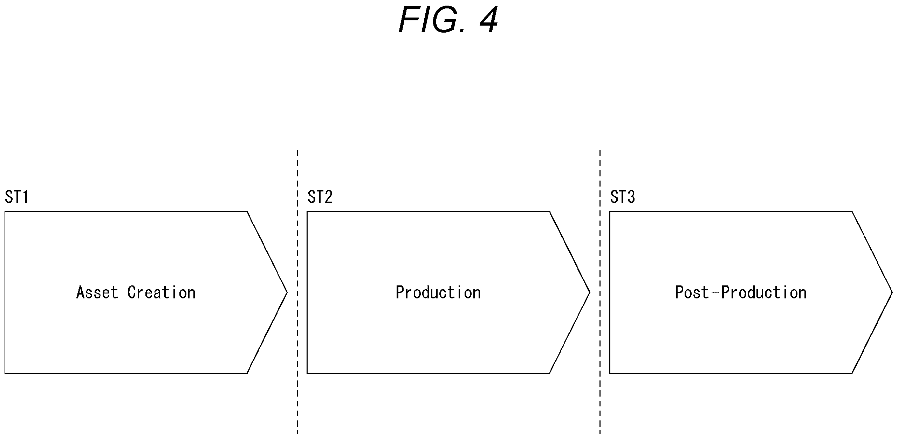

Here, a description will be given of a producing step for a video content as virtual production in which imaging is performed by the imaging system 500. As illustrated in Fig. 4, the video content producing step is roughly divided into three stages. The stages are asset creation ST1, production ST2, and post-production ST3.

The asset creation ST1 is a step of producing 3D background data for displaying the background video vB. As described above, the background video vB is generated by performing rendering in real time using the 3D background data at the time of imaging. For that purpose, 3D background data as a 3D model is produced in advance.

Examples of a method of producing the 3D background data include full computer graphics (CG), point cloud data (Point Cloud) scanning, and photogrammetry.

The full CG is a method of producing a 3D model with computer graphics. Among the three methods, the method requires the most man-hours and time, but is suitably used in a case where an unrealistic video, a video that is difficult to capture in practice, or the like is desired to be the background video vB.

The point cloud data scanning is a method of generating a 3D model based on the point cloud data by performing distance measurement from a certain position using, for example, LiDAR, capturing an image of 360 degrees by a camera from the same position, and placing color data captured by the camera on a point measured by the LiDAR. Compared with the full CG, the 3D model can be produced in a short time. Furthermore, it is easy to produce a 3D model with higher definition than that by photogrammetry.

The photogrammetry is a photogrammetry technology for analyzing parallax information from two-dimensional images obtained by imaging an object from a plurality of viewpoints to obtain dimensions and shapes. 3D model production can be performed in a short time.

Note that point cloud information acquired by the LiDAR may be used in 3D data generation by the photogrammetry.

In the asset creation ST1, a 3D model to be 3D background data is produced by using these methods, for example. Of course, the above methods may be used in combination. For example, a part of a 3D model produced by the point cloud data scanning or the photogrammetry is produced by CG and combined, or the like.

The production ST2 is a step of performing imaging in the imaging studio as illustrated in Fig. 1. Element technologies in this case include real-time rendering, background display, camera tracking, lighting control, and the like.

The real-time rendering is rendering processing for obtaining the capturing region video vBC at each time point (each frame of the background video vB) as described with reference to Figs. 2 and 3. This is to render the 3D background data produced in the asset creation ST1 from a viewpoint according to the position and the like of the camera 502 at each time point.

In this way, the real-time rendering is performed to generate the background video vB of each frame including the capturing region video vBC, and the background video vB is displayed on the LED wall 505.

The camera tracking is performed to obtain imaging information by the camera 502, and tracks position information, the imaging direction, the angle of view, and the like at each time point of the camera 502. By providing the imaging information including these to a rendering engine in association with each frame, it is possible to execute real-time rendering according to the viewpoint position and the like of the camera 502.

The imaging information is information linked with or associated with a video as metadata.

It is assumed that the imaging information includes position information, a camera orientation, an angle of view, a focal length, an F-number (aperture value), a shutter speed, lens information, and the like on the camera 502 at each frame timing.

The lighting control is to control the state of lighting in the imaging system 500, and specifically, to control the amount of light, emission color, lighting direction, and the like of the light 580. For example, the lighting control is performed according to time setting, place setting, and the like of a scene to be imaged.

The post-production ST3 indicates various types of processing performed after imaging. For example, video correction, video adjustment, clip editing, video effect, and the like are performed.

As the video correction, color gamut conversion, color matching between cameras and materials, and the like may be performed.

As the video adjustment, color adjustment, luminance adjustment, contrast adjustment, and the like may be performed.

As the clip editing, cutting of clips, adjustment of order, adjustment of a time length, and the like may be performed.

As the video effect, combining of a CG video, a special effect video, or the like may be performed.

Next, a description will be given of a configuration of the imaging system 500 used in the production ST2.

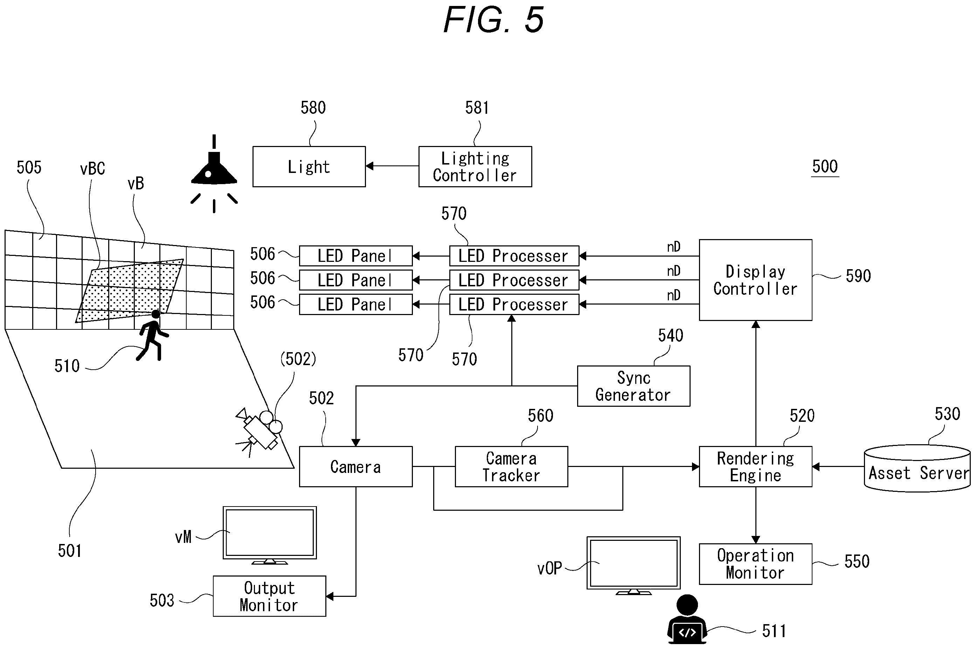

Fig. 5 is a block diagram illustrating a configuration of the imaging system 500 whose outline has been described with reference to Figs. 1, 2, and 3.

The imaging system 500 illustrated in Fig. 5 includes the LED wall 505 including the plurality of LED panels 506, the camera 502, the output monitor 503, and the light 580, described above. As illustrated in Fig. 5, the imaging system 500 further includes a rendering engine 520, an asset server 530, a sync generator 540, an operation monitor 550, a camera tracker 560, LED processors 570, a lighting controller 581, and a display controller 590.

Each of the LED processors 570 is provided corresponding to one or multiple LED panels 506, and performs video display drive of the corresponding one or multiple LED panels 506.

The sync generator 540 generates a synchronization signal for synchronizing frame timings of display videos by the LED panels 506 and a frame timing of imaging by the camera 502, and supplies the synchronization signal to the respective LED processors 570, the camera 502, and the rendering engine 520.

The camera tracker 560 generates imaging information by the camera 502 at each frame timing and supplies the imaging information to the rendering engine 520. For example, the camera tracker 560 detects the position information on the camera 502 relative to a position of the LED wall 505 or a predetermined reference position or the imaging direction of the camera 502 as one of pieces of the imaging information, and supplies the information to the rendering engine 520.

As a specific detection method by the camera tracker 560, there is a method of randomly disposing reflectors on a ceiling and detecting a position from reflected light of infrared light emitted to the reflectors from the camera tracker 560 assembled to the camera 502. Furthermore, as a detection method, there is also a method of estimating a self-position of the camera 502 on the basis of information from a gyro mounted on a camera platform of the camera 502 or a main body of the camera 502, or image recognition of a captured video by the camera 502.

Furthermore, the angle of view, the focal length, the F-number, the shutter speed, the lens information, and the like may be supplied as the imaging information from the camera 502 to the rendering engine 520.

The asset server 530 is a server that can store the 3D model produced in the asset creation ST1, that is, the 3D background data on a recording medium and read the 3D model as necessary. That is, the server functions as a data base (DB) of the 3D background data.

The rendering engine 520 performs processing of generating the background video vB to be displayed on the LED wall 505. For this purpose, the rendering engine 520 reads necessary 3D background data from the asset server 530. Then, the rendering engine 520 generates a video of the outer frustum to be used in the background video vB as a video obtained by rendering the 3D background data in a form of being viewed from spatial coordinates designated in advance.

Furthermore, the rendering engine 520 specifies the viewpoint position and the like with respect to the 3D background data by using the imaging information supplied from the camera tracker 560 or the camera 502, and renders the capturing region video vBC (inner frustum).

Furthermore, the rendering engine 520 combines the capturing region video vBC dynamically changing according to movement of the camera 502 with the outer frustum to generate the background video vB as video data of one frame. Then, the rendering engine 520 transmits the generated video data of one frame to the display controller 590.

The display controller 590 generates divided video signals nD obtained by dividing the video data of one frame into video portions to be displayed on the respective LED panels 506, and transmits the divided video signals nD to the respective LED panels 506. At this time, the display controller 590 may perform calibration according to individual differences of color development or the like, manufacturing errors, and the like between display units.

Note that the display controller 590 may not be provided, and the rendering engine 520 may perform these pieces of processing. That is, the rendering engine 520 may generate the divided video signals nD, perform calibration, and transmit the divided video signals nD to the respective LED panels 506.

The LED processors 570 respectively drive the LED panels 506 on the basis of the received divided video signals nD, whereby the entire background video vB is displayed on the LED wall 505. The background video vB includes the capturing region video vBC rendered according to the position or the like of the camera 502 at that time point.

The camera 502 can image the performance by the performer 510 including the background video vB displayed on the LED wall 505 in this manner. The video obtained by imaging by the camera 502 is recorded on a recording medium in the camera 502 or an external recording apparatus (not illustrated), and is supplied to the output monitor 503 in real time and displayed as the monitor video vM.

The operation monitor 550 displays an operation image vOP for controlling the rendering engine 520. An engineer 511 can perform necessary setting and operation regarding rendering of the background video vB while viewing the operation image vOP.

The lighting controller 581 controls emission intensity, emission color, irradiation direction, and the like of the light 580. For example, the lighting controller 581 may control the light 580 asynchronously with the rendering engine 520, or may perform control in synchronization with the imaging information and the rendering processing. For that purpose, the lighting controller 581 may perform light emission control in accordance with an instruction from the rendering engine 520, a master controller (not illustrated), or the like. Furthermore, the rendering engine 520 may control the light 580.

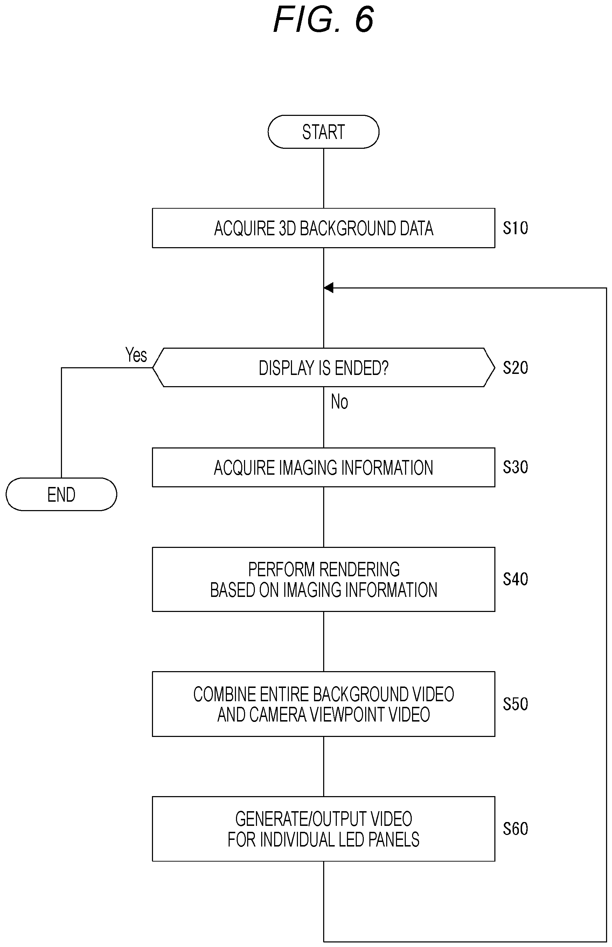

Fig. 6 illustrates an example of processing by the rendering engine 520 in the imaging system 500 having such a configuration.

In step S10, the rendering engine 520 reads the 3D background data to be used this time from the asset server 530, and deploys the 3D background data to an internal work area.

At this stage, a video used as the outer frustum may be generated.

Thereafter, the rendering engine 520 repeats the processing from step S30 to step S60 until it is determined in step S20 that the display is ended of the background video vB based on the read 3D background data.

In step S30, the rendering engine 520 acquires the imaging information from the camera tracker 560 or the camera 502. As a result, the position and state of the camera 502 to be reflected in the current frame are confirmed.

In step S40, the rendering engine 520 performs rendering on the basis of the imaging information. That is, the viewpoint position with respect to the 3D background data is specified on the basis of the position, the imaging direction, the angle of view, and the like of the camera 502 to be reflected in the current frame, and rendering is performed. At this time, video processing can also be performed reflecting the focal length, the F-number, the shutter speed, the lens information, and the like. By this rendering, it is possible to obtain video data as the capturing region video vBC (inner frustum). The outer frustum is generated in advance as a fixed video in step S10, or may be generated for each frame in step S40.

In step S50, the rendering engine 520 performs processing of combining the outer frustum, which is the entire background video, and the video reflecting the viewpoint position of the camera 502, that is, the capturing region video vBC. For example, the processing is to combine a video generated by reflecting the viewpoint of the camera 502 with a video of the entire background rendered at a specific reference viewpoint. As a result, the background video vB of one frame displayed on the LED wall 505, that is, the background video vB including the capturing region video vBC is generated.

The processing in step S60 is performed by the rendering engine 520 or the display controller 590. In step S60, the rendering engine 520 or the display controller 590 generates the divided video signals nD obtained by dividing the background video vB of one frame into videos to be displayed on the individual LED panels 506. Calibration may be performed. Then, the divided video signals nD are transmitted to the respective LED processors 570.

By the above processing, the background video vB including the capturing region video vBC to be captured by the camera 502 is displayed on the LED wall 505 at each frame timing.

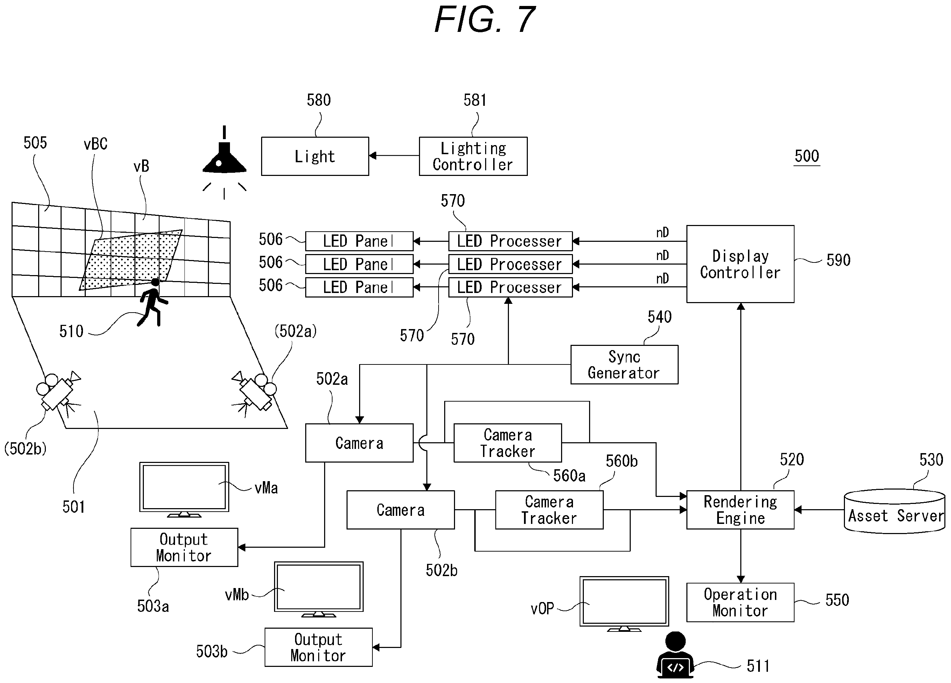

Incidentally, only one camera 502 is illustrated in Fig. 5, but imaging can be performed by a plurality of cameras 502. Fig. 7 illustrates a configuration example in a case where multiple cameras 502a and 502b are used. The cameras 502a and 502b can independently perform imaging in the performance area 501. Furthermore, synchronization between the cameras 502a and 502b and the LED processors 570 is maintained by the sync generator 540.

Output monitors 503a and 503b are provided corresponding to the cameras 502a and 502b, and are configured to display the videos captured by the corresponding cameras 502a and 502b as monitor videos vMa and vMb, respectively.

Furthermore, camera trackers 560a and 560b are provided corresponding to the cameras 502a and 502b, respectively, and detect positions and imaging directions of the corresponding cameras 502a and 502b, respectively. The imaging information from the camera 502a and the camera tracker 560a and the imaging information from the camera 502b and the camera tracker 560b are transmitted to the rendering engine 520.

The rendering engine 520 can perform rendering for obtaining the background video vB of each frame by using the imaging information on one or both of the camera 502a side or the camera 502b side.

Note that although Fig. 7 illustrates an example in which two cameras 502a and 502b are used, it is also possible to perform imaging by using three or more cameras 502.

However, when a plurality of the cameras 502 is used to render and display the capturing region videos vBC (inner frustum) corresponding to the respective cameras 502 by using the respective pieces of imaging information, there is a circumstance that the capturing region videos vBC interfere with each other. For example, in the example in which the two cameras 502a and 502b are used as illustrated in Fig. 7, the capturing region video vBC corresponding to the camera 502a is illustrated, but in a case where the video by the camera 502b is used, the capturing region video vBC corresponding to the camera 502b is also necessary. In that case, when the capturing region videos vBC corresponding to the respective cameras 502a and 502b are simply displayed, they interfere with each other. For this reason, it is necessary to contrive the display of the capturing region videos vBC.

### <2. Configuration of Information Processing Apparatus>

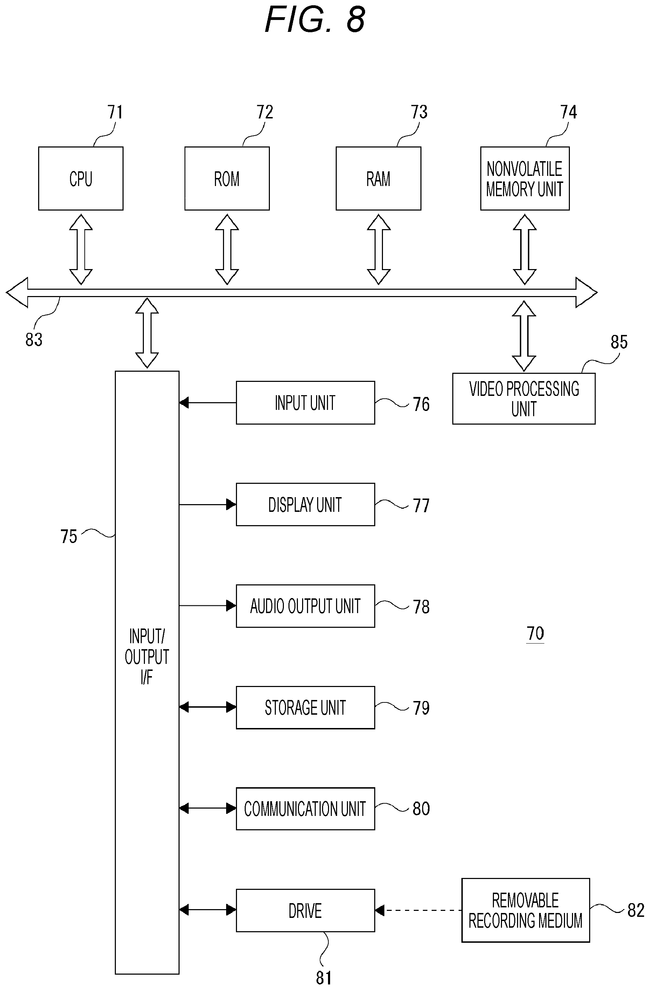

Next, with reference to Fig. 8, a description will be given of a configuration example of an information processing apparatus 70 that can be used in the asset creation ST1, the production ST2, and the post-production ST3.

The information processing apparatus 70 is a device capable of performing information processing, particularly video processing, such as a computer device. Specifically, a personal computer, a workstation, a portable terminal apparatus such as a smartphone and a tablet, a video editing apparatus, and the like are assumed as the information processing apparatus 70. Furthermore, the information processing apparatus 70 may be a computer apparatus configured as a server apparatus or an arithmetic apparatus in cloud computing.

In the case of the present embodiment, specifically, the information processing apparatus 70 can function as a 3D model production apparatus that produces a 3D model in the asset creation ST1.

Furthermore, the information processing apparatus 70 can also function as the rendering engine 520 or the asset server 530 constituting the imaging system 500 used in the production ST2.

Furthermore, the information processing apparatus 70 can also function as a video editing apparatus that performs various types of video processing in the post-production ST3.

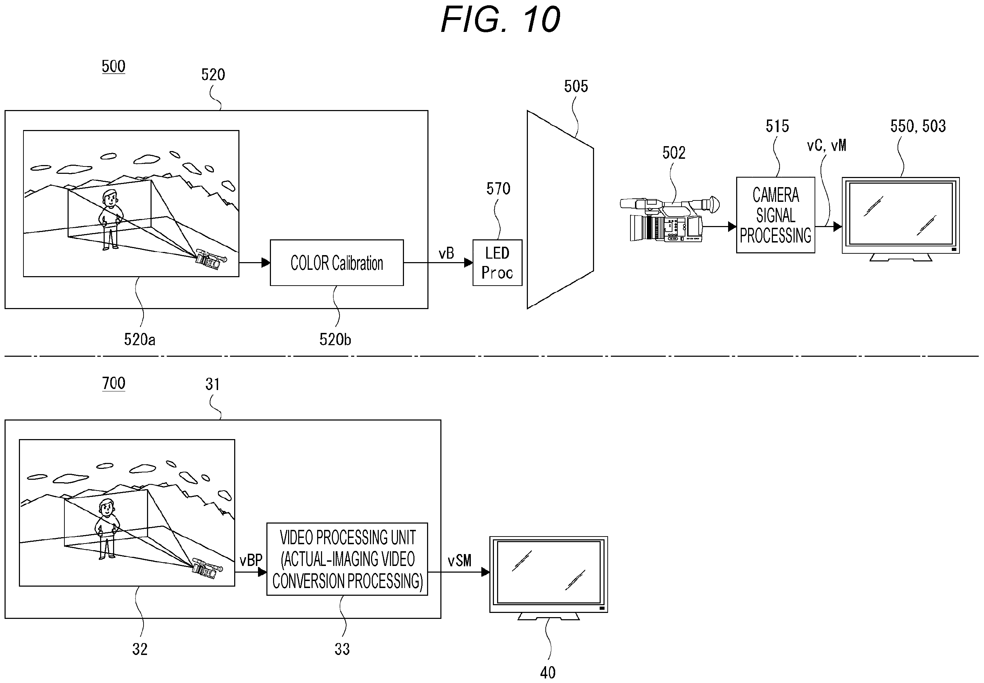

Furthermore, the information processing apparatus 70 can also function as an information processing apparatus (rendering engine 31) that generates a simulation video vSM in pre-visualization described later with reference to Fig. 10 and the like.

A CPU 71 of the information processing apparatus 70 illustrated in Fig. 8 executes various types of processing in accordance with a program stored in a nonvolatile memory unit 74 such as a ROM 72 or, for example, an electrically erasable programmable read-only memory (EEP-ROM), or a program loaded from a storage unit 79 to a RAM 73. The RAM 73 also appropriately stores data and the like necessary for the CPU 71 to execute the various types of processing.

A video processing unit 85 is configured as a processor that performs various types of video processing. The processor is a processor capable of performing any one or a plurality of pieces of processing of, for example, 3D model generation processing, rendering, DB processing, video processing including color/luminance adjustment processing, video editing processing, video analysis/detection processing, and the like.

The video processing unit 85 can be implemented by, for example, a CPU separate from the CPU 71, a graphics processing unit (GPU), general-purpose computing on graphics processing units (GPGPU), an artificial intelligence (AI) processor, or the like.

Note that the video processing unit 85 may be provided as a function in the CPU 71.

The CPU 71, the ROM 72, the RAM 73, the nonvolatile memory unit 74, and the video processing unit 85 are connected to one another via a bus 83. An input/output interface 75 is also connected to the bus 83.

An input unit 76 including an operation element or an operation device is connected to the input/output interface 75. For example, as the input unit 76, various operation elements and operation devices are assumed such as a keyboard, a mouse, a key, a trackball, a dial, a touch panel, a touchpad, a grating panel, and a remote controller.

The input unit 76 detects operation by a user, and the CPU 71 interprets a signal corresponding to the input operation.

A microphone is also assumed as the input unit 76. It is also possible to input voice uttered by the user as operation information.

Furthermore, a display unit 77 including a liquid crystal display (LCD), an organic electro-luminescence (EL) panel, or the like, and an audio output unit 78 including a speaker or the like are integrally or separately connected to the input/output interface 75.

The display unit 77 is a display unit that performs various displays, and includes, for example, a display device provided in a housing of the information processing apparatus 70, a separate display device connected to the information processing apparatus 70, or the like.

The display unit 77 displays various images, operation menus, icons, messages, and the like, that is, performs display as a graphical user interface (GUI), on a display screen on the basis of an instruction from the CPU 71.

In some cases, the storage unit 79 including a hard disk drive (HDD), a solid-state memory, or the like or a communication unit 80 is connected to the input/output interface 75.

The storage unit 79 can store various types of data and programs. A DB can also be configured in the storage unit 79.

For example, in a case where the information processing apparatus 70 functions as the asset server 530, or the rendering engine 31 to be described later, a DB that stores a 3D background data group can be constructed by using the storage unit 79.

The communication unit 80 performs communication processing via a transmission path such as the Internet, and communication with various devices such as an external DB, an editing apparatus, and an information processing apparatus via wired/wireless communication, bus communication, or the like.

For example, in a case where the information processing apparatus 70 functions as the rendering engine 520, or the rendering engine 31 to be described later, it is possible to access the DB as the asset server 530, and receive imaging information from the camera 502 or the camera tracker 560, by the communication unit 80.

Furthermore, also in the case of the information processing apparatus 70 used in the post-production ST3, it is also possible to access the DB as the asset server 530 by the communication unit 80.

A drive 81 is also connected to the input/output interface 75 as necessary, and a removable recording medium 82 is appropriately mounted such as a magnetic disk, an optical disk, a magneto-optical disk, a semiconductor memory, or the like.

It is possible to read video data, various computer programs, and the like from the removable recording medium 82 by the drive 81. The read data is stored in the storage unit 79, and video and audio included in the data are output by the display unit 77 and the audio output unit 78. Furthermore, the computer programs and the like read from the removable recording medium 82 are installed in the storage unit 79, as necessary.

In the information processing apparatus 70, for example, software for the processing in the present embodiment can be installed via network communication by the communication unit 80 or the removable recording medium 82. Alternatively, the software may be stored in advance in the ROM 72, the storage unit 79, or the like.

### <3. First Embodiment>

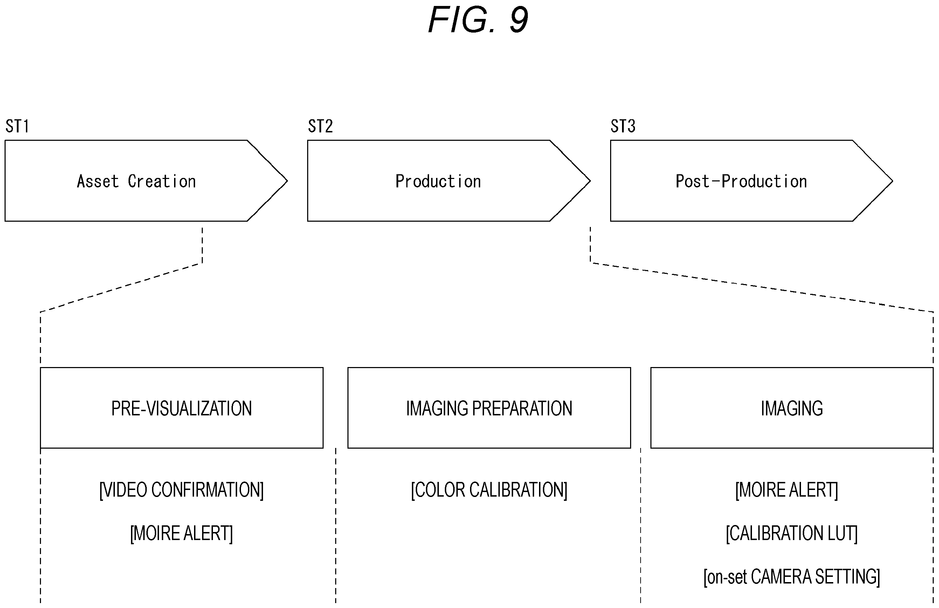

In the following embodiments, attention is focused on processing as the pre-visualization. First, positioning of the pre-visualization in a video production process will be described with reference to Fig. 9.

Fig. 9 illustrates a flow of the asset creation (ST1), the production (ST2), and the post-production (ST3) described above with reference to Fig. 4.

The production (ST2) is a stage where imaging is actually performed in a studio, but this is divided into imaging preparation and imaging.

On the other hand, the pre-visualization focused on in the embodiments is assumed to be mainly performed at a stage before the imaging preparation. Note that the order in time series is not necessarily limited, but the pre-visualization is only required to be performed at a stage after the 3D model for rendering the background video vB is produced in the asset creation (ST1).

In this sense, the pre-visualization may be considered to be performed at the final stage of the asset creation (ST1), or may be considered to be performed at a stage before the imaging preparation in the production (ST2).

In the pre-visualization, pieces of processing called video confirmation and moire alert are performed. Although these will be described in detail as processing in the embodiments, the video confirmation is processing for enabling the director and staff to confirm a captured video vC obtained by imaging before the imaging. The confirmation including the color tone of the captured video vC is mainly enabled by the simulation video.

The moire alert is, for example, processing of performing moire prediction when the staff virtually operates a camera position while performing the video confirmation, and issuing a warning in a case where the moire is predicted to appear. This makes it possible to avoid occurrence of artifacts at the time of subsequent imaging.

At a stage of the imaging preparation, color calibration is performed together with various settings for the LED, the camera, and the like in the imaging system 500. Specifically, a calibration look up table (LUT) is generated that cancels a color change occurring when the LED wall 505 is imaged by the camera 502. The calibration LUT is, for example, a 3D-LUT.

Note that, instead of the 3D-LUT, a combination of a matrix and a 1D-LUT, or preparation for calibration performed in other video signal processing may be performed.

At a stage of the imaging, moire alert, calibration LUT, and on-set camera setting are performed.

The moire alert in this case is processing of outputting the moire alert to the cameraman or the like in real time in accordance with moire determination by the rendering engine 520.

The calibration LUT is processing of canceling a color change related to background video display by the LED wall 505, the camera 502, or the like by applying a LUT generated by color calibration in the imaging preparation.

The on-set camera setting is processing of acquiring a camera setting set in the pre-visualization from, for example, a cloud server or the like and reflecting the camera setting in the camera 502 of the studio.

Hereinafter, a configuration example as a first embodiment will be described with reference to Fig. 10. Note that, in the following embodiments, the configuration of the imaging system 500 and a configuration for the pre-visualization will be described in parallel. The upper part of the drawings in Figs. 10, 13, 15, and 18 illustrates a simplified configuration of the imaging system 500 described in Fig. 5 and the like, and the lower part of the drawing illustrates a configuration (a pre-visualization system 700) used in the pre-visualization.

Regarding the imaging system 500, Fig. 10 illustrates the rendering engine 520, the LED processor 570, the LED wall 505, the camera 502, a camera signal processing unit 515, and the operation monitor 550 or the output monitor 503.

The operation monitor 550 or the output monitor 503 in this drawing comprehensively indicates monitors that display the captured video vC and the monitor video vM in the studio that is an imaging site. Hereinafter, the monitors are abbreviated as "monitor 550 and the like" for the sake of description.

The rendering engine 520 is illustrated as including a rendering unit 520a and a color calibration unit 520b.

As described above, the rendering unit 520a indicates a function of rendering the inner frustum (capturing region video) vBC according to the positions of the outer frustum and the camera 502 and the imaging direction, and generating the background video vB to be displayed on the LED wall 505. That is, the rendering unit 520a is a function of performing the processing in Fig. 6.

The rendering engine 520 may have a function as the color calibration unit 520b. The color calibration unit 520b indicates a function of performing calibration processing for canceling a color change caused by processing by the LED processor 570, LED light emission characteristics of the LED panels 506 (not illustrated in Fig. 10) constituting the LED wall 505, the camera's light reception characteristics and processing, and the like.

That is, the color calibration unit 520b performs color conversion on the rendered background video vB by using the LUT generated by the color calibration in the stage of the imaging preparation.

In a case where the calibration LUT processing is performed by the function as the color calibration unit 520b in the rendering engine 520 in this manner, for example, it is also possible not to cause the color change on the display side of the background video vB to occur.

Note that the color change mentioned here is a color change caused by processing until the rendered background video vB is displayed on the LED wall 505, light emission characteristics, the camera's light reception characteristics and processing, and the like.

In a case where the rendering engine 520 does not have the function as the color calibration unit 520b, or in a case where the function is not enabled even if the rendering engine has the function, there is a case where a change occurs due to color tone, that is, color shading, RGB balance, or the like between a color in a state of being rendered from the 3D model and a color in a state of being displayed on the LED wall 505.

Fig. 10 illustrates the camera signal processing unit 515 that performs signal processing of a captured video signal for the camera 502. Although omitted in Figs. 5 and 7, the camera signal processing unit 515 may be formed by a processor or the like in the camera 502, or may be provided as an apparatus of a separate unit from the camera 502.

The video signal captured by the camera 502 is subjected to development processing including luminance processing, color processing, and the like, resizing processing, and the like by the camera signal processing unit 515, and is output as the captured video vC or the monitor video vM.

The captured video vC is recorded as a main line video on a recording medium or transmitted to another device for broadcasting or distribution. Furthermore, the captured video vC is used as the monitor video vM and displayed on the monitor 550 and the like.

For the imaging system 500 as described above, for example, the pre-visualization system 700 is configured as a system outside the studio. The pre-visualization system 700 includes at least the information processing apparatus 70 that functions as the rendering engine 31 and a monitor 40.

The rendering engine 31 includes, for example, the information processing apparatus 70 separate from the rendering engine 520.

The rendering engine 31 includes a rendering unit 32 and a video processing unit 33.

The rendering unit 32 has a rendering function similar to that of the rendering unit 520a in the rendering engine 520 described above, and can generate a background video vBP on the basis of the 3D model.

The rendering unit 32 can perform rendering of the background video vB by using at least the 3D model produced in the asset creation (ST1) step. That is, the same 3D model as that used in the production (ST2) step is acquired from, for example, the asset server 530 (see Figs. 5 and 7), and rendering is performed using the 3D model.

Then, the rendering unit 32 can render, for example, the inner frustum by using the 3D model. Note that, in a case where the inner frustum (capturing region video vBC) is generated, any camera position and direction are input, and rendering is performed at a viewpoint position with respect to the 3D model according to the input camera position and direction.

The background video generated by the rendering unit 32 is referred to as the "background video vBP" in the sense of being distinguished from the capturing region video vBC generated by the rendering engine 520 at the time of imaging for the sake of description.

The video processing unit 33 indicates a function of performing various types of video processing on the background video vBP.

The video processing unit 33 performs actual-imaging video conversion processing as one of types of video processing. The actual-imaging video conversion processing is processing of generating the simulation video vSM imitating the camera 502 actually used for imaging. In the actual-imaging video conversion processing, the simulation video vSM is generated for the background video vBP by using at least a processing parameter that achieves a characteristic of luminance or color at the time of imaging by the camera 502 used in the imaging system 500.

By setting the parameter related to the luminance or the color to be the same as that of the camera 502 at the time of imaging, the simulation video vSM having the same color tone as that of the captured video vC is generated, and the simulation video vSM is displayed on the monitor 40.

The monitor 40 indicates a monitor apparatus that displays a video output from the information processing apparatus 70 as the rendering engine 31, and may be, for example, a monitor apparatus in a place different from the imaging studio or a monitor apparatus in the imaging studio. The monitor 40 may have any form as long as it displays the simulation video vSM at least at a stage of the pre-visualization.

In the rendering engine 31, the rendering unit 32 generates the background video vBP, and the video processing unit 33 performs the actual-imaging video conversion processing to generate the simulation video vSM. By displaying this on the monitor 40, the staff can confirm the simulation video vSM having the same color tone as the background video included in the captured video vC at the time of imaging. As a result, it is possible to confirm the color prior to imaging and adjust the color in the camera 502 or the camera signal processing unit 515 at the imaging preparation stage as necessary.

As such actual-imaging video conversion processing by the video processing unit 33, at least the color tone of the background video vBP rendered by the rendering unit 32 is set to be equivalent to the video of the background included in the captured video vC at the time of actual imaging.

For this purpose, specifically, the video processing unit 33 adjusts parameters such as RGB gains, a white balance value, a gamma value, and an offset value to those of the camera 502.

For example, the video processing unit 33 performs processing of giving R, G, and B gains similar to values of gains for pixel signals of respective colors read from an image sensor in the camera 502 to the background video vBP.

Furthermore, the video processing unit 33 performs white balance processing on the background video vBP with the same white balance value as the white balance value at the time of imaging by the camera 502 in the actual-imaging video conversion processing.

As a result, the simulation video vSM serving as the background having the same color tone as the background in the captured video vC is obtained. As a result, on the monitor 40, it is possible to confirm a video having the same color tone as that in a case where the captured video vC is viewed on the monitor 550 and the like at the time of imaging.

Moreover, as the actual-imaging video conversion processing, the video processing unit 33 may perform processing of making the angle of view the same of the background video vBP by the cutout range from the image sensor of the camera 502, zoom magnification setting, and the like.

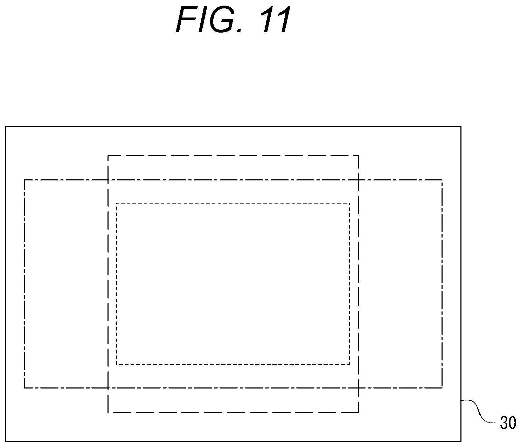

For example, Fig. 11 illustrates an example of a reading range from an image sensor 30 of the camera 502. It is assumed that a solid line indicates the entire pixel region of the image sensor 30. Reading of a photoelectric conversion signal to be an imaging signal from the image sensor 30 may be performed in the entire pixel region indicated by the solid line in some cases, or may be performed in various cases depending on a reading mode, such as a range indicated by a dotted line, a range indicated by a broken line, and a range indicated by a one-dot chain line. The angle of view of the captured video vC varies depending on a difference between these reading ranges.

Thus, in the actual-imaging video conversion processing by the video processing unit 33, the angle of view is also made equivalent to the captured video vC.

Furthermore, as the actual-imaging video conversion processing, the video processing unit 33 may perform processing of reflecting various characteristics (characteristics such as a lens type (spherical or anamorphic), color, transmittance, flare, distortion aberration, and peripheral light loss) of a lens mounted on the camera 502 on the background video vBP. As a result, the simulation video vSM is brought closer to the captured video vC.

Furthermore, as the actual-imaging video conversion processing, the video processing unit 33 may perform processing of reflecting characteristics of an optical filter such as a circular polarizing filter mounted on the camera 502 on the background video vBP. As a result, even in a case where the filter is mounted and imaging is performed, the simulation video vSM is brought closer to the captured video vC.

Meanwhile, in a case where the color change up to the LED wall 505 is canceled by color calibration processing in the rendering engine 520 at the time of imaging, the actual-imaging video conversion processing may be processing of reflecting the color change or the like on the camera side. This is because it is assumed that the background video vB displayed on the LED wall 505 has no color change from a rendered state.

On the other hand, in a case where the color calibration as described above is not performed, there is a case where the color change has already occurred in the background video vB displayed on the LED wall 505. In such a case, in the actual-imaging video conversion processing in the video processing unit 33, processing of reflecting luminance (intensity) characteristics and the like of respective colors on the LED side is also performed. As a result, the simulation video vSM can be brought close to the captured video vC.

Note that, as a premise of the above-described actual-imaging video conversion processing, camera settings such as a frame rate, a shutter speed, and an exposure value of a virtual camera assumed when the rendering engine 31 renders the simulation video vSM are similar to those of the actual camera 502. That is, the video processing unit 33 generates the simulation video vSM imitating the color tone of the actual captured video vC by performing color processing such as the RGB gains and the white balance value after setting the background video vBP to have RGB values according to various camera settings such as the frame rate, the shutter speed, the exposure value, and ND setting.

Brightness of the LED wall 505 may be reflected similarly to the camera settings.

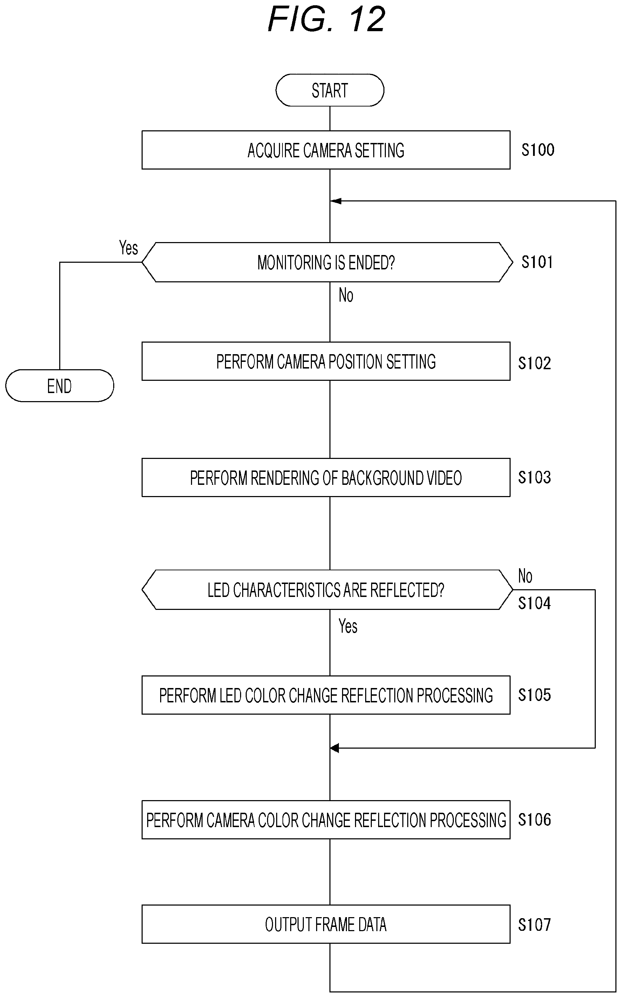

Fig. 12 illustrates an example of processing by the rendering engine 31 at the time of the pre-visualization.

First, in step S100, the rendering engine 31 acquires the camera settings and white balance of the camera 502 at the time of imaging, and sets processing parameters accordingly. Basic parameters are set such as the frame rate, the shutter speed, and the exposure value. Furthermore, in step S100, the rendering engine 31 may acquire various characteristics of the lens and characteristics of the optical filter mounted on the camera 502 at the time of imaging and reflect them in the processing parameters.

In step S101, the rendering engine 31 determines the end of monitoring of the simulation video vSM in the pre-visualization. Until the monitoring ends, the rendering engine 31 executes the processing in and after step S102 for each frame, for example.

In step S102, the camera position is set. This is processing of virtually setting the relative position and direction (imaging direction) of the camera 502 with respect to the LED wall 505. That is, it is processing of setting the viewpoint position with respect to the 3D model at the time of rendering.

If there is the setting of the position and the camera path (camera movement locus) of the camera 502 at the time of actual imaging at the stage of the pre-visualization, it is only required to set the camera position for each frame by using the information. Furthermore, the staff may perform input to arbitrarily set the camera position at the stage of the pre-visualization.

In step S103, the rendering engine 31 performs rendering of the background video vBP by using the 3D model after setting the viewpoint position according to the set camera position. For example, a background video corresponding to the inner frustum (capturing region video vBC) is generated.

In step S104, the rendering engine 31 determines whether or not to cancel the color change up to the LED wall 505 by the color calibration processing at the time of imaging.

The rendering engine 31 may determine presence or absence of the color calibration processing at the time of imaging and contents of the processing by user input or the like, or may perform the determination by communication with the rendering engine 520 of the imaging system 500 as long as communication cooperation with the imaging system 500 is possible. In the case of a system in which the rendering engine 31 also serves as the processing by the rendering engine 520, the presence or absence of the color calibration processing is known without performing communication or the like.

In a case where the color calibration processing is not performed at the time of imaging, the rendering engine 31 performs the processing in step S105 as one of pieces of the actual-imaging video conversion processing. That is, luminance and color processing is performed of reflecting a change characteristic of luminance or color occurring in the background video vB displayed on the LED wall 505 also in the background video vBP. For example, color correction is performed on the background video vBP by setting gain parameters according to luminance balances of respective colors of RGB of the LED panel 506.

In a case where the color change up to the LED wall 505 is canceled in the color calibration processing at the time of imaging, since the color change does not occur in the background video vB displayed on the LED wall 505, the processing in step S105 is skipped.

That is, in a case where the color calibration processing is performed at the time of imaging, a change in luminance or color occurring in the background video vB displayed on the LED wall 505 is canceled, whereas in a case where the color calibration processing is not performed at the time of imaging, the change in luminance or color occurring in the background video vB displayed on the LED wall 505 affects colors of the captured video vC. Thus, in a case where the color calibration processing is not performed at the time of imaging, the color change up to the LED wall 505 is also reflected in the simulation video vSM by performing the processing in step S105.

Subsequently, the rendering engine 31 performs the processing in step S106 as one of pieces of the actual-imaging video conversion processing. That is, luminance and color processing is performed of reflecting a color change occurring on the camera 502 side also in the background video vBP. For example, as described above, processing is performed of setting the white balance value and the RGB gains to be similar to those of the camera 502.

Note that, moreover, in the actual-imaging video conversion processing in step S106, the rendering engine 31 may perform processing of reflecting the angle of view, lens characteristics, optical filter characteristics, and the like.

The background video vBP subjected to the processing in step S106 or the processing in steps S105 and S106 becomes the simulation video vSM.

In step S107, the rendering engine 31 outputs one frame as the simulation video vSM. For example, the frame is output to the monitor 40 and displayed.

By executing the above processing by the rendering engine 31, it is possible for the staff or the like who performs imaging by the imaging system 500 to confirm the color tone and the like of the captured video vC in advance with the monitor 40.

### <4. Second Embodiment>

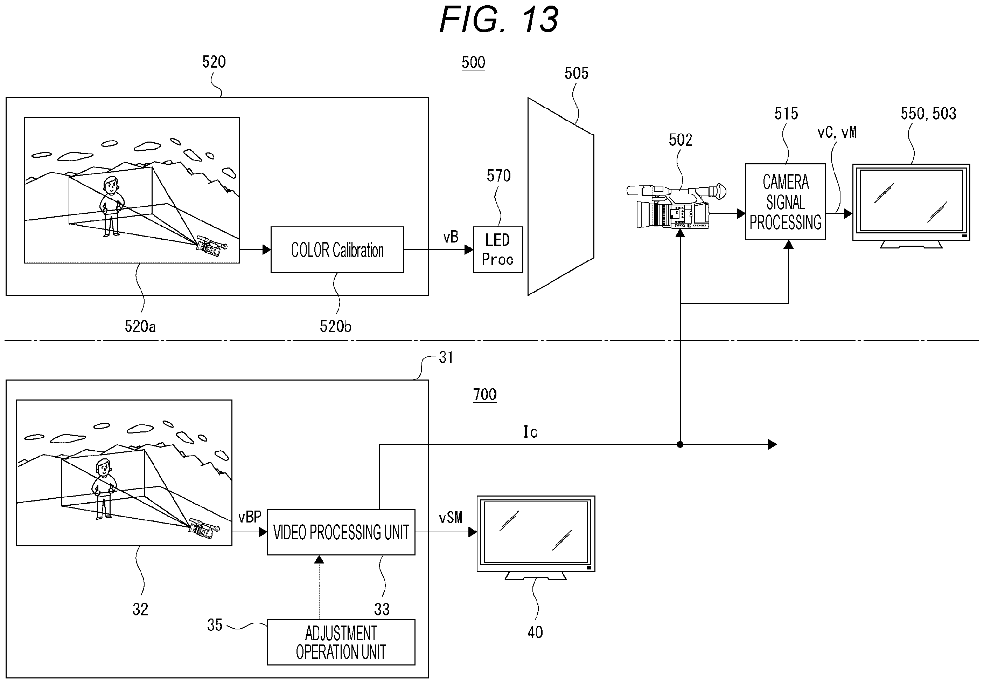

Fig. 13 illustrates a configuration example of a second embodiment.

In the second embodiment, the staff is enabled to actively perform color adjustment. On the monitor 40, the simulation video vSM by the actual-imaging video conversion processing by the video processing unit 33 is displayed as described above, and the staff can confirm the color tone.

In this case, the rendering engine 31 is made to have a function of the adjustment operation unit 35 that can be used for the color adjustment operation by the user such as the staff. For example, a GUI or the like using the display unit 77 or the input unit 76 of the information processing apparatus 70 serving as the rendering engine 31 is provided to the user. As a result, the user can operate the color tone of the video while viewing the monitor 40.

That is, in a case where the staff views the simulation video vSM by the actual-imaging video conversion processing and feels that the color tone is different from intended color tone, the staff performs color adjustment to obtain a desired color.

Furthermore, by providing adjustment content to the camera 502 or the camera signal processing unit 515 as color conversion information Ic, it is possible to reflect the adjusted color at the time of imaging.

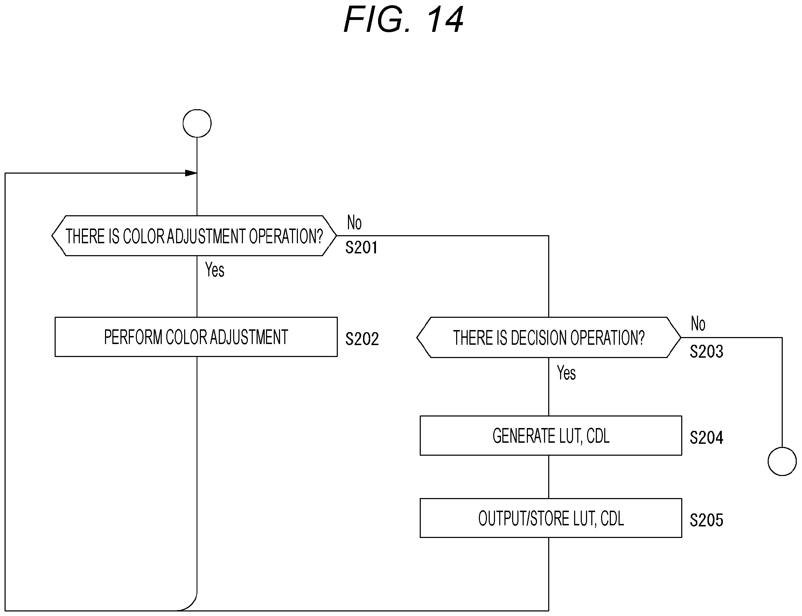

Specifically, the rendering engine 31 performs processing as illustrated in Fig. 14 by the function of the video processing unit 33 in addition to the processing in Fig. 12 described above.

In step S201, the rendering engine 31 monitors the user's color adjustment operation using the GUI by the adjustment operation unit 35.

In a case where the color adjustment operation is detected, the rendering engine 31 proceeds to step S202 and performs color adjustment processing according to the color adjustment operation.

Furthermore, in step S203, the rendering engine 31 monitors decision operation by the adjustment operation unit 35. The decision operation mentioned here is operation for an instruction to generate the color conversion information Ic for enabling reproduction of a state of the color after adjustment later.

Specifically, the color conversion information Ic is an LUT, a color decision list (CDL), or the like described below.

When the decision operation is performed, the rendering engine 31 proceeds to step S204 and performs processing of generating the LUT or the CDL as the color conversion information Ic.

The LUT in this case is, for example, a three-dimensional LUT (3D LUT) that stores colors of R, G, and B values after adjustment with respect to R, G, and B values of original colors indicated by grid points of three axes with levels of R, G, and B as three axes.

The CDL has a parameter for adjusting a slope, an offset, and power, a parameter for adjusting saturation, and the like for each of R, G, and B.

The color conversion information Ic as the LUT or the CDL indicates a change in color due to user's adjustment operation with reference to the color of the simulation video vSM generated in the actual-imaging video conversion processing, for example.

In step S205, the rendering engine 31 performs processing of storing the generated LUT or CDL and outputting the LUT or CDL to a predetermined device.

For example, as an output destination of the LUT or the CDL, it is conceivable to use the camera 502 or the camera signal processing unit 515 as illustrated in Fig. 13.

That is, in the second embodiment, in a case where the staff can confirm the color tone and the like of the captured video vC in advance with the simulation video vSM, the staff is enabled to actively adjust the color. Then, the LUT or the CDL corresponding to the adjustment content is generated, and it is enabled to use them at the time of later imaging.

By introducing the LUT or the CDL into the camera 502 or the camera signal processing unit 515, it is possible to execute color adjustment by applying the LUT and the CDL to the captured video vC.

That is, the staff can confirm the captured video vC in advance and perform color adjustment as necessary. The color adjustment can be applied in video processing at the time of imaging by being stored/output as the LUT or the CDL. As a result, the captured video vC is subjected to the color adjustment similar to that in the pre-visualization. In other words, it is possible to confirm the color tone of the captured video vC in advance and even performs adjustment.

### <5. Third Embodiment>

A third embodiment is an example in which the video processing unit 33 of the rendering engine 31 performs processing of changing the camera setting information to be reflected in the simulation video vSM according to the input, and is enabled to output the camera setting information.

The camera setting information mentioned here indicates, for example, reading size setting from the image sensor 30, shutter speed setting, exposure setting, ND setting, lens characteristics, focus/iris/zoom operation setting, white balance value, RGB gains, and the like.

In the above-described actual-imaging video conversion processing, basically, these setting values are adjusted to the settings of the camera 502 used for imaging, whereby the actual captured video vC is simulated.

Then, in the third embodiment, it is enabled to prepare various camera settings in advance by performing adjustment operation on these camera settings.

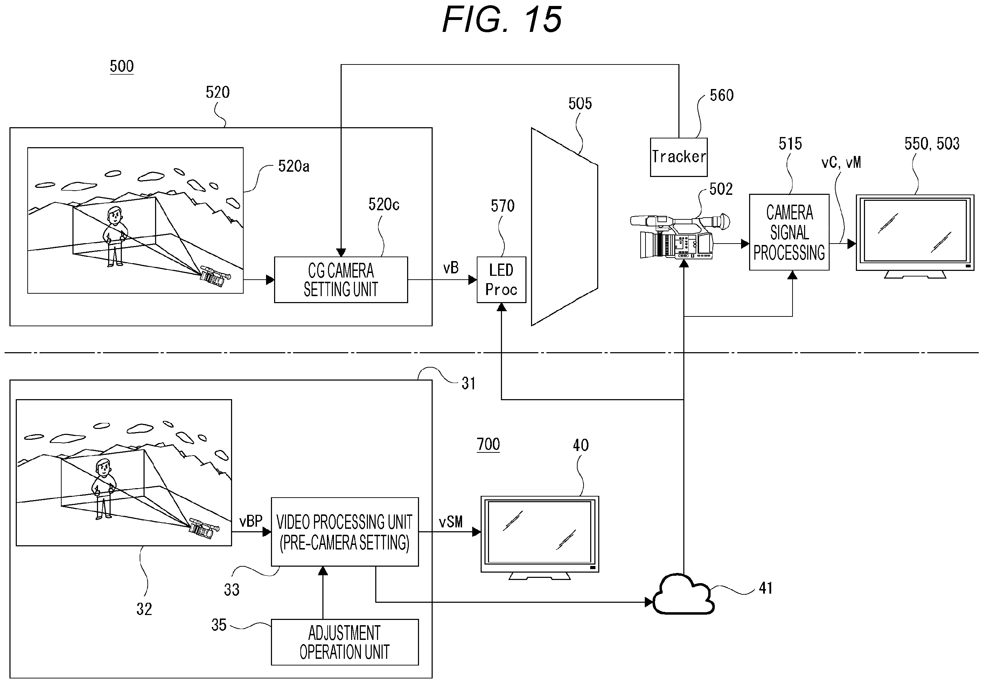

Fig. 15 illustrates that the video processing unit 33 performs pre-camera setting processing.

The pre-camera setting is processing in which, for example, the staff changes the camera setting described above by operating the adjustment operation unit 35 while viewing the simulation video vSM on the monitor 40. The video processing unit 33 performs video processing, for example, conversion of each luminance value of RGB, or the like, in which an exposure setting change is reflected in a pseudo manner in the simulation video vSM according to operation such as shutter speed or exposure setting, for example.

Furthermore, the video processing unit 33 enables storage or transmission of the camera settings changed according to the operation. For example, it is enabled to reflect camera settings according to the adjustment operation in the camera 502 or the like at the time of later imaging.

Fig. 15 illustrates that the camera settings are transmitted to a cloud server 41. It is assumed that the cloud server 41 can store the camera settings transmitted from the rendering engine 31 and provide the camera settings to the imaging system 500 later.

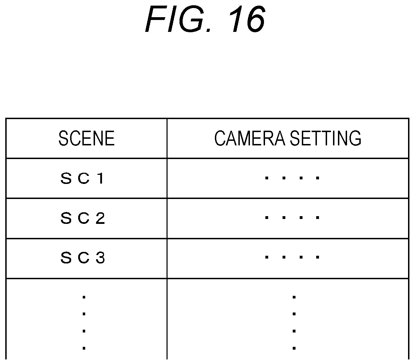

For example, the user performs adjustment operation of various camera settings while confirming the simulation video vSM in the pre-visualization, and adjusts, for example, the camera settings for each scene. They are uploaded to the cloud server 41, whereby the cloud server 41 stores the camera settings according to each of scenes SC1, SC2, and SC3 as illustrated in Fig. 16, for example.

It is enabled to download such camera settings from the cloud server 41 to the camera 502 or the camera signal processing unit 515, so that it is enabled to use the camera settings at the time of actual imaging.

Note that it is also enabled to download the setting information to the LED processor 570 by enabling adjustment of the settings on the LED side similarly in addition to the camera settings.

Furthermore, the camera settings may include the LUT, the CDL, or the like described in the second embodiment in addition to the information described above.

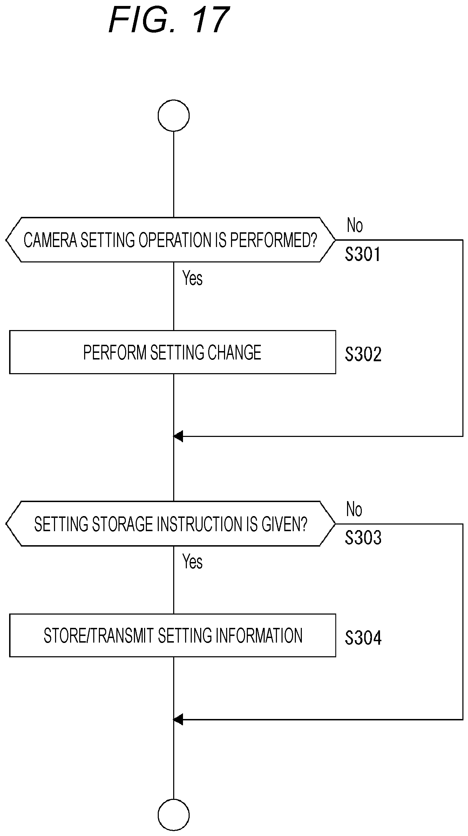

Fig. 17 illustrates an example of processing by the rendering engine 31 using the function of the video processing unit 33. For example, the rendering engine 31 is enabled to execute the processing in Fig. 17 in addition to the processing in Fig. 12 and the processing in Fig. 14.

In step S301, the rendering engine 31 monitors whether or not adjustment operation related to the camera settings is performed by the adjustment operation unit 35.

In a case where the adjustment operation is performed, the rendering engine 31 performs setting change for the camera settings in step S302. Note that, since there is no actual camera, the setting change is processing of changing video processing parameters necessary so as to achieve a video by the camera settings.

In this state, the user can view the simulation video vSM in a case where the camera setting is changed.

In step S303, the rendering engine 31 detects a setting storage instruction. In a case where the user gives the setting storage instruction by operation by the adjustment operation unit 35 or the like, the rendering engine 31 proceeds to step S304 and stores or transmits the camera setting information at the time point. For example, the rendering engine 31 performs processing of storing the information in an internal storage medium or transmitting the information to an external device such as the cloud server 41.

As a result, it is enabled to use the camera settings adjusted by the staff at the stage of the pre-visualization in the imaging system 500 at the time of later imaging.

### <6. Fourth Embodiment>

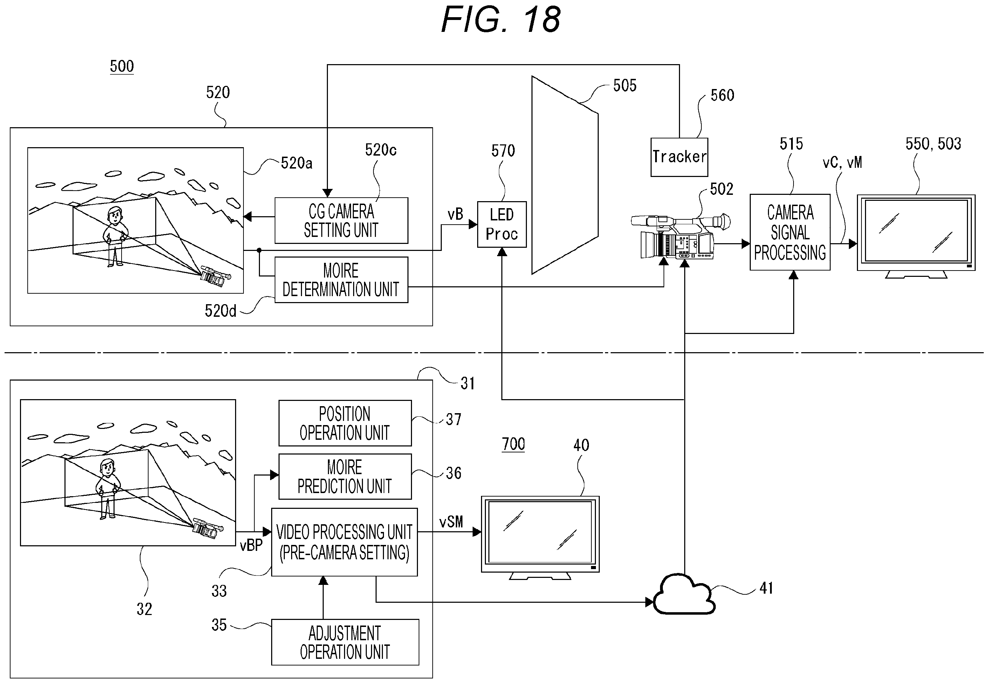

A fourth embodiment will be described with reference to Fig. 18. The fourth embodiment is an example in which it is enabled to output a moire alert at the stage of the pre-visualization.

Fig. 18 illustrates a moire prediction unit 36 and a position operation unit 37 in the rendering engine 31. The position operation unit 37 is an interface function that enables the user to arbitrarily operate a virtual camera position.

The moire prediction unit 36 is a function of predicting whether or not moire occurs in a state of a set camera position by a specific algorithm.

The specific algorithm is an algorithm for determining, from information, for example,
- camera position, angle, iris/focus/zoom state
- position and angle of display (virtual LED wall set by rendering engine 31)
and the like that an artifact such as a moire or a scan line occurs when imaging is actually performed in this state.

In a case where occurrence of moire is predicted under conditions such as a camera position, the moire prediction unit 36 notifies the video processing unit 33 of information on the occurrence of moire and information on the occurrence position.

The video processing unit 33 causes the monitor 40 to display a video indicating a moire warning or a moire position, for example.

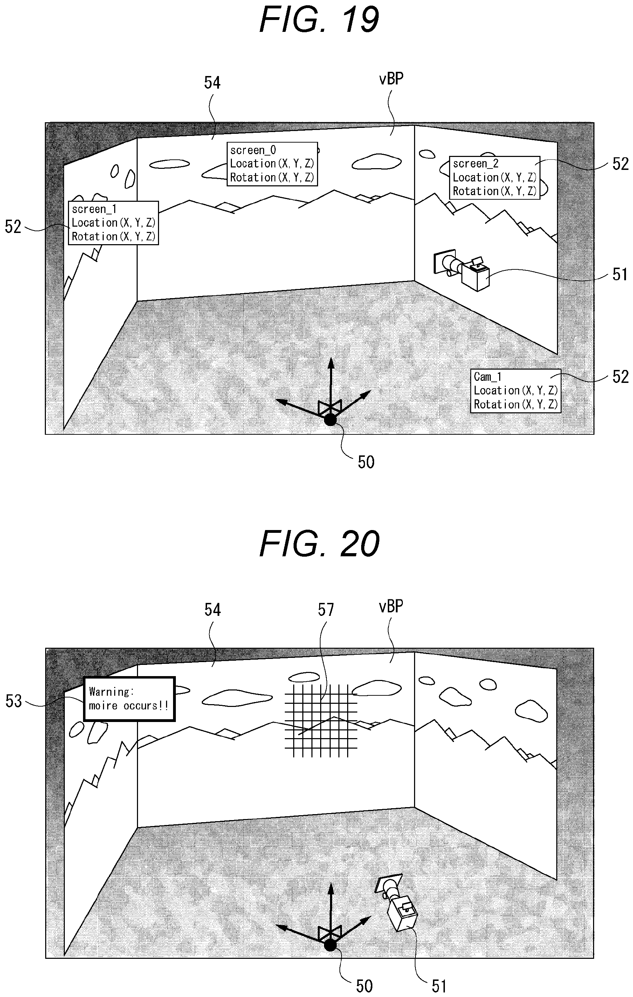

For example, Fig. 19 illustrates a video including the simulation video vSM of the background video vBP, and is an image further illustrating a virtual LED wall 54 and a virtual camera 51.

The video processing unit 33 is enabled to display not only the simulation video vSM of the background video vBP simply but also a video in which the viewpoint position is set to a certain position in the studio, for example.

In the video in Fig. 19, position information 52 on the LED wall 54 and position information 52 on the camera are further displayed.

Furthermore, as origin information 50, an origin position serving as a reference of each position in the space and three axial directions of X, Y, and Z are illustrated.

Fig. 20 is an example in which a moire alert 53 is displayed and a moire position 57 is indicated.

For example, a position of the camera 51 is changed from that in Fig. 19, but it is assumed that moire generation prediction is performed in this state. In this case, the moire alert 53 is displayed, and a position where moire occurs is displayed as the moire position 57.

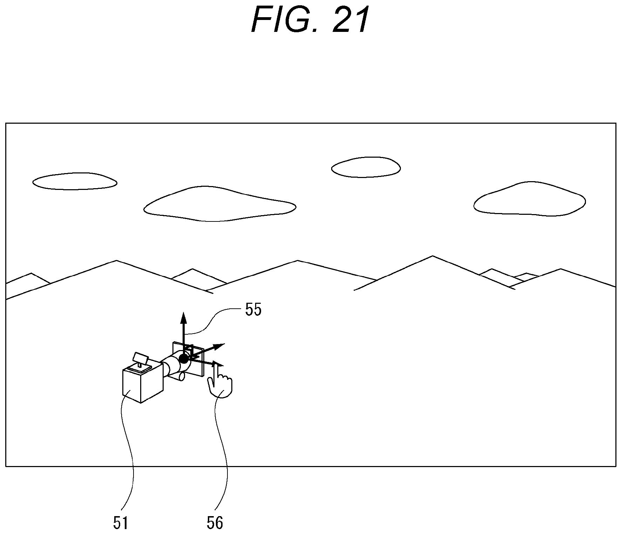

Note that the user can arbitrarily change the position of the camera 51 on the video. For example, when the user performs operation to designate the camera 51, movement axes 55 in the X, Y, and Z directions are displayed as illustrated in Fig. 21. When the user performs operation such as dragging while aligning a cursor 56 with a certain movement axis 55, the position of the camera 51 in the virtual space is changed. For example, a user interface as described above is provided by the function of the position operation unit 37.

Thus, the user can confirm whether or not moire occurs while arbitrarily moving the virtual camera 51.

As a result, it is also possible to set the camera position and the camera path at the time of actual imaging so as not to cause moire.

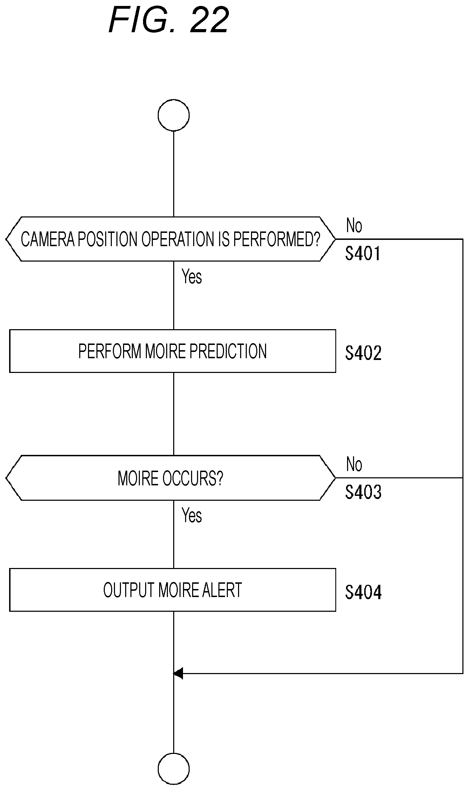

Fig. 22 illustrates processing related to moire by the rendering engine 31. The rendering engine 31 executes the processing in Fig. 22 in addition to the processing in Fig. 12, the processing in Fig. 14, and the processing in Fig. 17, for example.

In step S401, the rendering engine 31 monitors whether or not camera position operation is performed.

For example, in a case where the user performs the camera position operation by the function of the position operation unit 37, the rendering engine 31 proceeds to step S402 and performs moire prediction using information on the changed camera position and imaging direction.

Note that the processing may proceed to step S402 not only in the camera position operation but also in a case where zoom operation, exposure adjustment operation, or the like is performed.

In step S403, the rendering engine 31 confirms a result of the moire prediction, and in a case where it is predicted that moire occurs, processing of outputting a moire alert is performed in step S404.

As described above, the moire alert 53 as illustrated in Fig. 20 is displayed, so that the staff can know the occurrence of moire at a stage before imaging. Thus, it is possible to consider a camera position and a camera path that do not cause moire before actual imaging.

Meanwhile, the rendering engine 520 can also perform moire determination at the time of actual imaging.

Fig. 18 illustrates a CG camera setting unit 520c and a moire determination unit 520d in addition to the rendering unit 520a on the rendering engine 520 side.

The CG camera setting unit 520c receives the imaging information from the camera tracker 560, for example, the position, the imaging direction, the angle of view, the focal length, the F-number, the shutter speed, the lens information, and the like of the camera 502, and causes the rendering unit 520a to execute rendering corresponding thereto.

The moire determination unit 520d determines whether or not moire is currently generated for the rendered capturing region video vBC by using the information obtained by the CG camera setting unit 520c. That is, current moire occurrence determination is performed by an algorithm similar to that by the moire prediction unit 36.

Then, in a case where it is determined that moire is generated, for example, information thereon is transmitted to the camera 502, and it is caused to display the moire alert on a viewfinder or the like.

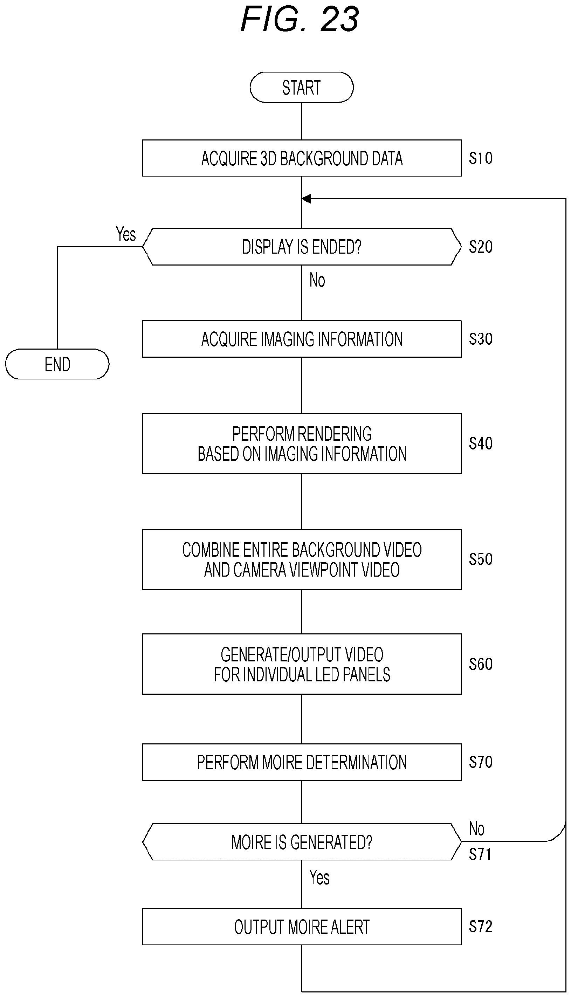

Fig. 23 illustrates an example of processing of performing such real-time moire alert. Note that, in Fig. 23, in addition to step S10 to step S60 described in Fig. 6, step S70 and subsequent steps are performed.

As described above, the rendering engine 520 performs the processing from step S30 to step S60 for each frame timing. As a result, the background video vB is displayed on the LED wall 505.

The rendering engine 520 performs moire determination in step S70.

In step S71, the rendering engine 520 confirms a result of the moire determination, and in a case where it is determined that moire is generated, processing of outputting a moire alert is performed in step S72. For example, the rendering engine 520 transmits information on the moire alert to the camera 502 so that the moire alert is displayed on the viewfinder or the like. Alternatively, the moire alert may be displayed on the monitor 550 and the like.

As described above, the cameraman can recognize that moire is currently generated during imaging and deal with that. It is possible to dealt with that by moving the camera position or performing focus adjustment, for example.

### <7. Flow of Imaging Data>

Next, a description will be given of a form of providing the captured video vC obtained in the production (ST2) using the imaging system 500 to the post-production (ST3).

The captured video vC captured by the camera 502 can be transmitted to, for example, a distribution server and streamed in real time. As a result, a part of production staff of the video content can remotely monitor the captured video vC on an external monitor.

Furthermore, the captured video vC is converted into a file as a moving image file and transferred to a cloud server or the like, and is stored in a shareable manner by post production staff, so that various types of work of post-production can be performed.

At that time, conversion into metadata is performed of the position information, the camera orientation, the angle of view, the focal length, the aperture value, the shutter speed, the lens information, and the like on the camera 502 as the imaging information at the time of imaging, and the used LUT, CDL, and the like, and the metadata is included in the file. Alternatively, the imaging information, the LUT, the CDL, and the like are made to be able to be referred to in association with at least the moving image. As a result, editing or the like using the information at the time of imaging can be performed.

The moving image file may be a file of any format such as a RAW moving image file, a moving image file such as Moving Picture Experts Group (MPEG)-4, Audio Video Interleave (AVI), Quick time File Format (MOV), or Windows Media Video (WMV), a mezzanine file, or a proxy moving image file.

As described above, work of confirmation or adjustment in the pre-visualization can be executed by the rendering engine 31 by the information processing apparatus 70 outside the studio.

Furthermore, as described above, the captured video vC is monitored in real time or is shared by a cloud server or the like, so that post-production can be performed without being tied to an imaging studio. That is, it is possible to promote remote working and efficiency of a series of video production work.

### <8. Summary and Modification Examples>

According to the above-described embodiments, the following effects can be obtained.

The rendering engine 31 of the embodiment implemented by the information processing apparatus 70 includes the rendering unit 32 that performs rendering using the 3D model used at the time of imaging by the imaging system 500 to generate the background video vBP that is the virtual video. Furthermore, the rendering engine 31 includes the video processing unit 33 that performs, on the background video vBP generated by the rendering unit 32, the actual-imaging video conversion processing for generating the simulation video vSM by using the processing parameter that achieves the characteristic of luminance or color at the time of imaging of the camera 502 used in the imaging system 500.

As a result, it is possible to display the monitor video imitating states of luminance and color in the captured video vC at the stage before imaging. Thus, prior to imaging, a director or staff can confirm conditions of luminance and color of the captured video vC obtained by imaging.

Actually at the stage of imaging, the captured video vC may be obtained different from a color tone and the like imagined by a director or the like, but in that case, color adjustment in a studio at the site takes time, and production efficiency is reduced. For this reason, it is important to be able to confirm the color tone and the like of the captured video vC in advance before imaging.

Furthermore, in the case of virtual production, the 3D model for the background video vB is produced at the stage of the asset creation (ST1). That is, it is in an environment where the background video vB can be rendered at the stage before imaging. For this reason, as illustrated in Fig. 10, the actual-imaging video conversion processing is added by the video processing unit 33, whereby the luminance and color confirmation can be implemented in advance.

Note that, in the embodiment, it has been described that the rendering engine 31 is implemented by the information processing apparatus 70 different from the rendering engine 520, but the rendering engines 31 and 520 may be implemented by one information processing apparatus 70.

In the embodiment, the case has also been described where the video processing unit 33 also performs display video processing (video processing in step S105 in Fig. 12) with the processing parameter that achieves the change characteristic of luminance or color of the video on the LED wall 505, and then performs camera video processing (video processing in step S106 in Fig. 12) with the processing parameter that achieves the characteristic of luminance or color at the time of imaging by the camera 502 to generate the simulation video vSM.

In a case where there is a change in color or luminance on the LED wall 505 side, that is, in a case where a change in color or luminance occurs in the processing by the LED panel 506 or the LED processor 570, it is possible to simulate the captured video vC at the time of imaging by also considering the change. As a result, simulation accuracy can be improved, which is suitable for video confirmation.

Note that, as described with reference to Fig. 10, by the processing by the color calibration unit 520b in the rendering engine 520, the color change due to a device or processing may be canceled in the background video vB on the LED wall 505 side. In the case of such an imaging system 500, the characteristics on the LED wall 505 side are not reflected, and the actual-imaging video conversion processing simulating the camera characteristics may be performed.

In the second embodiment, an example has been described in which the video processing unit 33 performs the color adjustment processing for the simulation video vSM according to a control signal based on user operation, and generates the color conversion information Ic on the basis of the color adjustment processing.

As described with reference to Fig. 13, the video processing unit 33 generates the LUT or the CDL as the color conversion information Ic. The staff can perform the color adjustment operation while confirming the monitor 40, and the LUT or the CDL is generated according to the color adjustment operation. That is, at the stage of the pre-visualization, desired color production is performed, and the color conversion information Ic for achieving the color production can be generated.

As described in the second embodiment, the video processing unit 33 is enabled to output the color conversion information Ic.

When generating the LUT or the CDL as the color conversion information Ic, the video processing unit 33 outputs the LUT or the CDL so that the LUT or the CDL can be used in the camera 502, the camera signal processing unit 515, or the like. As a result, color adjustment with the LUT or the like set at the stage of the pre-visualization can be easily implemented at the time of actual imaging.

In the third embodiment, an example has been described in which the video processing unit 33 is enabled to perform processing of changing the camera setting information to be reflected in the simulation video vSM according to a control signal based on user operation and output the changed camera setting information.

As described with reference to Fig. 15, the video processing unit 33 holds the settings at the time of imaging by the camera 502 as the pre-camera setting. The settings are, for example, size setting of reading from the image sensor 30, shutter speed setting, exposure setting, ND setting, lens characteristics, focus/iris/zoom operation setting, white balance setting, and the like. Furthermore, there is also a setting of the LUT or the like to be applied.

For example, it is enabled to change these settings from a state of being the same as those of the camera 502 by operation by the staff. Then, it is enabled to output the adjusted camera setting information and provide the information to the camera 502, the camera signal processing unit 515, or the LED processor 570. As a result, it is possible to adjust the camera settings at the time of imaging to an optimum state while confirming the video at the stage of the pre-visualization. The actual imaging work can be started from the state confirmed at the time of the pre-visualization.

In the embodiment, the white balance value is included as the processing parameter that achieves the characteristic of luminance or color at the time of imaging by the camera 502 used in the imaging system 500.

It is important to be able to confirm the color tone of the captured video vC at the time of imaging before imaging. For that purpose, in the pre-visualization, it is suitable to generate the simulation video vSM subjected to the actual-imaging video conversion processing including the white balance value applied by the camera 502 at the time of imaging.

Furthermore, in the embodiment, the values of the gains for the pixel signals of the respective colors read from the image sensor in the camera 502 are included as the processing parameter that achieves the characteristic of luminance or color at the time of imaging by the camera 502 used in the imaging system 500.

As an element for confirming the color tone of the captured video vC, for example, there is a color balance determined by the gains for the respective pixel signals of R, G, and B. Thus, in the pre-visualization, it is suitable to perform the actual-imaging video conversion processing including the gains (color balance) for the R, G, and B signals applied in the camera 502 at the time of imaging.

Furthermore, in the embodiment, an example has been described in which the video processing unit 33 generates the simulation video vSM with the angle of view setting based on the angle of view information at the time of imaging by the camera 502 used in the imaging system 500 in the actual-imaging video conversion processing.

The simulation video vSM is a video having the same angle of view as the captured video vC at the time of imaging. This is because it is desirable for confirming the video that the simulation video vSM has the same color tone and, in addition, has the same angle of view as the captured video vC.

Note that the angle of view information includes angle of view information based on zoom setting and angle of view information indicating setting of the cutout range from the image sensor 30.

Furthermore, in the embodiment, an example has been described in which the video processing unit 33 generates the simulation video vSM reflecting the lens characteristics of the camera 502 used in the imaging system 500 in the actual-imaging video conversion processing.

Since it is desirable that the simulation video vSM is brought as close as possible to the captured video vC at the time of imaging, characteristics such as lens distortion are also expressed.

Furthermore, in the embodiment, an example has been described in which the video processing unit 33 generates the simulation video vSM reflecting the characteristics of the optical filter mounted on the camera 502 used in the imaging system 500 in the actual-imaging video conversion processing.

In a case where the optical filter is mounted on the camera 502, the simulation video vSM can be brought close to the captured video vC at the time of capturing by reflecting the optical filter characteristics.

In the fourth embodiment, an example has been described in which the moire warning output processing is performed according to the moire prediction information determined for the background video vBP rendered by the rendering unit 32.

As described with reference to Fig. 18, processing is performed of displaying the moire alert 53 on the monitor 40 or the like according to the moire prediction information by the moire prediction unit 36. As a result, a situation of moire can be predicted at the stage of the pre-visualization.

Furthermore, in the fourth embodiment, an example has been described in which a user interface is prepared for arbitrarily changing the camera position on the video, and moire prediction is performed according to the camera position changed by the user interface (see Figs. 19, 20, 21, and 22).

In a case where the staff is enabled to simulate various camera positions in a camera position operation video, the occurrence of moire is predicted according to the camera position. This also helps conception of camerawork, such as selecting a camera position where no moire appears.

Furthermore, in the fourth embodiment, an example has also been described in which processing is performed of displaying the moire alert on the viewfinder or the like of the camera 502 according to the moire determination information by the moire determination unit 520d (see Figs. 18 and 23). As a result, the cameraman or the like can know the situation of the moire at the time of imaging and deal with the situation.

Note that moire prediction by the moire prediction unit 36 and moire determination by the moire determination unit 520d may use the same algorithm or different algorithms. In the case of the same algorithm, prediction/determination thresholds may be the same or different.

The information processing apparatus 70, which is the rendering engine 31 in the embodiment, has been described as a device separate from the devices constituting the imaging system 500.

The information processing apparatus 70 for the pre-visualization is an apparatus different from the devices constituting the imaging system 500 constructed in the imaging studio. For example, the staff uses a device such as a PC or a tablet other than a studio set as the information processing apparatus 70 of the present embodiment. As a result, the staff can confirm the simulation video vSM in a place different from the studio, which is suitable for improving the efficiency of video content production.

Note that the simulation video vSM described in the embodiment can also be generated by using the rendering engine 520 in the imaging system 500. That is, if the rendering engine 520 has a function equivalent to that of the video processing unit 33 and performs the actual-imaging video conversion processing, it is also possible to confirm the simulation video vSM before imaging starts, for example, by using the imaging system 500.

A program of the embodiment is a program for causing, for example, a CPU, a processor such as a DSP, or a device including these to execute the processing as illustrated in Figs. 12, 14, 17, and 22 described above.

That is, the program of the embodiment is a program for causing an information processing apparatus to execute processing of generating a virtual video (for example, the background video vBP) by performing rendering using a 3D model used in the imaging system 500, and the actual-imaging video conversion processing of generating the simulation video vSM by using a processing parameter that achieves a characteristic of luminance or color at the time of imaging by the camera 502 used in the imaging system 500 on the generated virtual video.

With such a program, the information processing apparatus 70 that generates the simulation video vSM in the pre-visualization described above can be implemented by various computer apparatuses.

Such a program can be recorded in advance in an HDD as a recording medium built in a device such as a computer apparatus, a ROM in a microcomputer including a CPU, or the like. Furthermore, such a program can be temporarily or permanently stored (recorded) in a removable recording medium such as a flexible disk, a compact disc read only memory (CD-ROM), a magneto optical (MO) disk, a digital versatile disc (DVD), a Blu-ray Disc (registered trademark), a magnetic disk, a semiconductor memory, or a memory card. Such a removable recording medium can be provided as so-called package software.

Furthermore, such a program can be installed from the removable recording medium into a personal computer and the like, or can be downloaded from a download site through a network such as a local area network (LAN) or the Internet.

Furthermore, such a program is suitable for a wide range of provision of the information processing apparatus 70 serving as the rendering engine 31 of the embodiment. For example, by downloading the program to a personal computer, a communication device, a portable terminal apparatus such as a smartphone or a tablet, a mobile phone, a gaming device, a video device, a personal digital assistant (PDA), or the like, it is possible to cause these apparatuses to function as the information processing apparatus 70 (rendering engine 31) of the present disclosure.

Note that the effects described in the present description are merely examples and are not limited, and other effects may be provided.

Note that the present technology can also adopt the following configurations.
(1) An information processing apparatus including:
   a rendering unit that generates a virtual video by performing rendering using a 3D model used in an imaging system that captures, by a camera, a video on a display that displays the virtual video obtained by the rendering using the 3D model; and
   a video processing unit that performs, on the virtual video generated by the rendering unit, actual-imaging video conversion processing for generating a simulation video by using a processing parameter that achieves a characteristic of luminance or color at a time of imaging by the camera used in the imaging system.
(2) The information processing apparatus according to (1), in which
   the video processing unit performs display video processing with a processing parameter that achieves a change characteristic of luminance or color of the video on the display, and then performs camera video processing with the processing parameter that achieves the characteristic of luminance or color at the time of imaging by the camera to generate the simulation video.
(3) The information processing apparatus according to (1) or (2), in which
   the video processing unit performs color adjustment processing for the simulation video according to a control signal based on user operation, and generates color conversion information on the basis of the color adjustment processing.
(4) The information processing apparatus according to (3), in which
   the video processing unit is enabled to output the color conversion information.
(5) The information processing apparatus according to (4), in which
   the color conversion information is output as information used for signal processing for a captured video by the camera.
(6) The information processing apparatus according to any of (1) to (5), in which
   the video processing unit is enabled to perform processing of changing camera setting information to be reflected in the simulation video according to a control signal based on user operation, and output the camera setting information changed.
(7) The information processing apparatus according to (6), in which
   the camera setting information is output as information used for setting of the camera.
(8) The information processing apparatus according to any of (1) to (7), in which
   a white balance value is included as the processing parameter that achieves the characteristic of luminance or color at the time of imaging by the camera used in the imaging system.
(9) The information processing apparatus according to any of (1) to (8), in which
   a value of a gain for a pixel signal of each of colors read from an image sensor in the camera is included as the processing parameter that achieves the characteristic of luminance or color at the time of imaging by the camera used in the imaging system.
(10) The information processing apparatus according to any of (1) to (9), in which
   the video processing unit generates the simulation video with an angle of view setting based on angle of view information at the time of imaging by the camera used in the imaging system in the actual-imaging video conversion processing.
(11) The information processing apparatus according to any of (1) to (10), in which
   the video processing unit generates the simulation video reflecting lens characteristics of the camera used in the imaging system in the actual-imaging video conversion processing.
(12) The information processing apparatus according to any of (1) to (11), in which
   the video processing unit generates the simulation video reflecting characteristics of an optical filter mounted on the camera used in the imaging system in the actual-imaging video conversion processing.
(13) The information processing apparatus according to any of (1) to (12), in which
   moire warning output processing is performed according to moire prediction information determined for a video rendered by the rendering unit.
(14) The information processing apparatus according to (13), in which
   a user interface is prepared for arbitrarily changing a camera position on a video, and moire prediction is performed according to the camera position changed by the user interface.
(15) The information processing apparatus according to any of (1) to (14), in which
   the information processing apparatus is a device separate from a device constituting the imaging system.
(16) An information processing method including:
   generating a virtual video by performing rendering using a 3D model used in an imaging system that captures, by a camera, a video on a display that displays the virtual video rendered by using the 3D model; and
   performing actual-imaging video conversion processing of generating a simulation video by using a processing parameter that achieves a characteristic of luminance or color at a time of imaging by the camera used in the imaging system on the virtual video generated.
(17) A program causing an information processing apparatus to execute:
   processing of generating a virtual video by performing rendering using a 3D model used in an imaging system that captures, by a camera, a video on a display that displays the virtual video rendered by using the 3D model; and
   actual-imaging video conversion processing of generating a simulation video by using a processing parameter that achieves a characteristic of luminance or color at a time of imaging by the camera used in the imaging system on the virtual video generated.
(18) An information processing system including:
   an imaging system that captures, by a camera, a video on a display that displays a virtual video rendered by using a 3D model; and
   an information processing apparatus that uses the 3D model,
   in which the information processing apparatus includes:
      a rendering unit that generates the virtual video by performing rendering using the 3D model; and
      a video processing unit that performs, on the virtual video generated by the rendering unit, actual-imaging video conversion processing for generating a simulation video by using a processing parameter that achieves a characteristic of luminance or color at a time of imaging by the camera used in the imaging system.
(19) The information processing system according to (18), in which
   the imaging system
   performs moire warning output processing according to moire determination information in a case where the video on the display is captured by the camera.
(20) The information processing system according to (18) or (19), in which
   the video processing unit performs color adjustment processing for the simulation video according to a control signal based on user operation, and generates and outputs color conversion information on the basis of the color adjustment processing, and
   the imaging system performs signal processing for a captured video by the camera by using the color conversion information.
(21) The information processing system according to any of (18) to (20), in which
   the video processing unit performs processing of changing camera setting information to be reflected in the simulation video according to a control signal based on user operation, and outputs the camera setting information changed, and
   the imaging system performs setting of the camera on the basis of the camera setting information.

### REFERENCE SIGNS LIST

- 31: Rendering engine
- 32: Rendering unit
- 33: Video processing unit
- 35: Adjustment operation unit
- 36: Moire prediction unit
- 37: Position operation unit
- 40: Monitor
- 41: Cloud server
- 70: Information processing apparatus
- 500: Imaging system
- 502: Camera
- 503: Output monitor
- 505: LED wall
- 506: LED panel
- 515: Camera signal processing unit
- 520: Rendering engine
- 520a: Rendering unit
- 520b: Color calibration unit
- 520c: CG camera setting unit
- 700: Pre-visualization system
- vB, vBP: Background video
- vC: Captured video
- vM: Monitor video
- vSM: Simulation video
- vP: Camera position operation video
- Ic: Color conversion information

## Claims

1. An information processing apparatus comprising:
a rendering unit that generates a virtual video by performing rendering using a 3D model used in an imaging system that captures, by a camera, a video on a display that displays the virtual video obtained by the rendering using the 3D model; and
a video processing unit that performs, on the virtual video generated by the rendering unit, actual-imaging video conversion processing for generating a simulation video by using a processing parameter that achieves a characteristic of luminance or color at a time of imaging by the camera used in the imaging system.

2. The information processing apparatus according to claim 1, wherein
the video processing unit performs display video processing with a processing parameter that achieves a change characteristic of luminance or color of the video on the display, and then performs camera video processing with the processing parameter that achieves the characteristic of luminance or color at the time of imaging by the camera to generate the simulation video.

3. The information processing apparatus according to claim 1, wherein
the video processing unit performs color adjustment processing for the simulation video according to a control signal based on user operation, and generates color conversion information on a basis of the color adjustment processing.

4. The information processing apparatus according to claim 3, wherein
the video processing unit is enabled to output the color conversion information.

5. The information processing apparatus according to claim 4, wherein
the color conversion information is output as information used for signal processing for a captured video by the camera.

6. The information processing apparatus according to claim 1, wherein
the video processing unit is enabled to perform processing of changing camera setting information to be reflected in the simulation video according to a control signal based on user operation, and output the camera setting information changed.

7. The information processing apparatus according to claim 6, wherein
the camera setting information is output as information used for setting of the camera.

8. The information processing apparatus according to claim 1, wherein
a white balance value is included as the processing parameter that achieves the characteristic of luminance or color at the time of imaging by the camera used in the imaging system.

9. The information processing apparatus according to claim 1, wherein
a value of a gain for a pixel signal of each of colors read from an image sensor in the camera is included as the processing parameter that achieves the characteristic of luminance or color at the time of imaging by the camera used in the imaging system.

10. The information processing apparatus according to claim 1, wherein
the video processing unit generates the simulation video with an angle of view setting based on angle of view information at the time of imaging by the camera used in the imaging system in the actual-imaging video conversion processing.

11. The information processing apparatus according to claim 1, wherein
the video processing unit generates the simulation video reflecting lens characteristics of the camera used in the imaging system in the actual-imaging video conversion processing.

12. The information processing apparatus according to claim 1, wherein
the video processing unit generates the simulation video reflecting characteristics of an optical filter mounted on the camera used in the imaging system in the actual-imaging video conversion processing.

13. The information processing apparatus according to claim 1, wherein
moire warning output processing is performed according to moire prediction information determined for a video rendered by the rendering unit.

14. The information processing apparatus according to claim 13, wherein
a user interface is prepared for arbitrarily changing a camera position on a video, and moire prediction is performed according to the camera position changed by the user interface.

15. The information processing apparatus according to claim 1, wherein
the information processing apparatus is a device separate from a device constituting the imaging system.

16. An information processing method comprising:
generating a virtual video by performing rendering using a 3D model used in an imaging system that captures, by a camera, a video on a display that displays the virtual video rendered by using the 3D model; and
performing actual-imaging video conversion processing of generating a simulation video by using a processing parameter that achieves a characteristic of luminance or color at a time of imaging by the camera used in the imaging system on the virtual video generated.

17. A program causing an information processing apparatus to execute:
processing of generating a virtual video by performing rendering using a 3D model used in an imaging system that captures, by a camera, a video on a display that displays the virtual video rendered by using the 3D model; and
actual-imaging video conversion processing of generating a simulation video by using a processing parameter that achieves a characteristic of luminance or color at a time of imaging by the camera used in the imaging system on the virtual video generated.

18. An information processing system comprising:
an imaging system that captures, by a camera, a video on a display that displays a virtual video rendered by using a 3D model; and
an information processing apparatus that uses the 3D model,
wherein the information processing apparatus includes:
a rendering unit that generates the virtual video by performing rendering using the 3D model; and
a video processing unit that performs, on the virtual video generated by the rendering unit, actual-imaging video conversion processing for generating a simulation video by using a processing parameter that achieves a characteristic of luminance or color at a time of imaging by the camera used in the imaging system.

19. The information processing system according to claim 18, wherein
the imaging system
performs moire warning output processing according to moire determination information in a case where the video on the display is captured by the camera.

20. The information processing system according to claim 18, wherein
the video processing unit performs color adjustment processing for the simulation video according to a control signal based on user operation, and generates and outputs color conversion information on a basis of the color adjustment processing, and
the imaging system performs signal processing for a captured video by the camera by using the color conversion information.

21. The information processing system according to claim 18, wherein
the video processing unit performs processing of changing camera setting information to be reflected in the simulation video according to a control signal based on user operation, and outputs the camera setting information changed, and
the imaging system performs setting of the camera on a basis of the camera setting information.
